# EUROPÄISCHE PATENTSCHRIFT

(11) **EP 2 847 541 B1**
(45) Veröffentlichungstag und Bekanntmachung des Hinweises auf die Patenterteilung: **18.05.2016**
(21) Anmeldenummer: 12743982.6
(22) Anmeldetag: 07.08.2012
(51) Int. Cl.: G01B 11/00, G01B 11/03, G01B 11/245

(54) **KOORDINATENMESSGERÄT MIT WEIßLICHTSENSOR**
COORDINATE MEASURING DEVICE WITH A WHITE LIGHT SENSOR
APPAREIL DE MESURE DE COORDONNÉES ÉQUIPÉ D'UN CAPTEUR DE LUMIÈRE BLANCHE

(43) Veröffentlichungstag der Anmeldung: 18.03.2015
(73) Patentinhaber: Carl Zeiss Industrielle Messtechnik GmbH, 73447 Oberkochen (DE)
(72) Erfinder: ENGEL, Thomas, 73432 Aalen (DE)
(74) Vertreter: Witte, Weller & Partner Patentanwälte mbB
(86) Internationale Anmeldenummer: PCT/EP2012/065475
(87) Internationale Veröffentlichungsnummer: WO 2014/023343

(56) Entgegenhaltungen:
- WO-A1-2006/063838
- WO-A1-2009/121922
- WO-A2-2009/049834
- DE-A1- 19 816 270

## Beschreibung

Die vorliegende Erfindung betrifft ein Koordinatenmessgerät zum Vermessen eines Messobjekts, mit einer Werkstückaufnahme zur Aufnahme des Messobjekts, mit einem einen optischen Sensor tragenden Messkopf, wobei der Messkopf und die Werkstückaufnahme relativ zueinander verfahrbar sind, wobei der optische Sensor ein Objektiv und eine Kamera aufweist, die dazu ausgebildet ist, ein Bild des Messobjekts durch das Objektiv aufzunehmen, wobei das Objektiv eine Lichteintrittsöffnung und eine Lichtaustrittsöffnung aufweist, wobei das Objektiv eine Vielzahl von Linsengruppen aufweist, die in dem Objektiv zwischen der Lichteintrittsöffnung und der Lichtaustrittsöffnung hintereinander entlang einer Längsachse des Objektivs angeordnet sind.

Eine derartige Vorrichtung ist beispielsweise aus der Druckschrift DE 103 40 803 A1 oder aus der WO2009/049834 bekannt.

Die Verwendung von optischen Sensoren in Verbindung mit Koordinatenmessgeräten ermöglicht in vielen Fällen eine sehr schnelle Messung von geometrischen Eigenschaften eines Messobjekts. Ein Nachteil bekannter Koordinatenmessgeräte mit optischen Sensoren besteht bislang darin, dass die optischen Sensoren auf bestimmte Messaufgaben und bestimmte Werkstückeigenschaften begrenzt sind. Die optischen Sensoren sind in der Regel für eine bestimmte Art von Messaufgabe optimiert, etwa im Hinblick auf die erreichbare Messgenauigkeit oder den Messbereich. Probleme können beispielsweise Werkstücke machen, die parallel zur optischen Achse des Sensors große Höhendifferenzen aufweisen. Teilweise werden verschiedene optische und/oder taktile Sensoren verwendet, um flexibel auf verschiedene Messanforderungen reagieren zu können, wobei die einzelnen Sensoren jeweils nur einen Teil der gesamten Messaufgabe übernehmen. In der Regel ist jeder einzelne Sensor auf eine bestimmte Messaufgabe hin optimiert. Vor allem optische Sensoren besitzen daher eine jeweils individuelle Optik, die für einen bestimmten Einsatzzweck gut geeignet und für andere Zwecke weniger gut geeignet ist.

Beispielsweise wurden Koordinatenmessgeräte mit einem Weißlichtsensor vorgeschlagen. Ein solches Koordinatenmessgerät zweigt beispielsweise die Druckschrift DE 103 40 803 A1.

Die meisten der eingesetzten konfokalen Weißlichtsensoren sind Punktsensoren. Diese Sensoren erreichen eine Tiefenauflösung in einem Bereich weniger als 1 µm bis etwa 20 mm. Eine Auflösung in einem solchen Arbeitsbereich ist typischerweise mit etwa 15 Bit darstellbar. Eingesetzt werden solche Sensoren, um präzise Messungen entlang von Scanbahnen auf einem Messobjekt auszuführen. Häufig werden Messergebnisse dieser Sensoren mit Kamerabildern kombiniert. Auf diese Weise können die Vorteile einer schnellen Flächeninformation und einer sehr genauen Tiefeninformation kombiniert werden. Es sind auch Ausführungsformen bekannt, in denen mehrere Messkanäle bzw. Messpunkte nebeneinander angeordnet sind. Die einzelnen Messpunkte haben aber in der Regel eine größere laterale Distanz, so dass eine Messung mit einer echten, durchgezogenen Linie nicht möglich ist.

Andererseits wurde auch vorgeschlagen, eine Linie weißen Lichts auf ein Messobjekt zu richten. Dabei werden die unterschiedlichen Farben des Lichts innerhalb des zur Verfügung stehenden Spektrums in unterschiedliche Tiefen abgebildet. Das vom Messobjekt reflektierte Licht wird anschließend spektral analysiert und einem jeweiligen Messpunkt der Tiefenwert als Messwert zugeordnet, bei dem die reflektierte spektrale Lichtverteilung ihren Maximalwert hat.

Wie in der Druckschrift DE 103 40 803 A1 dargestellt, sind derartige Weißlichtsensoren zusätzlich zu den übrigen optischen Sensoren an der Trägerstruktur des Koordinatenmessgeräts angeordnet.

Die Bereitstellung von verschiedenen Sensoren für unterschiedliche Messaufgaben in einem Koordinatenmessgerät ermöglicht eine hohe Flexibilität in Verbindung mit einer hohen Messgenauigkeit. Nachteil sind die hohen Kosten für die Bereitstellung der zahlreichen Sensoren mit jeweils eigener an den Einsatzzweck des Sensors angepasster Optik. Des Weiteren benötigen die vielen Sensoren mit jeweils eigener Optik einen relativ großen Bauraum im Koordinatenmessgerät, was das Messvolumen einschränkt und weitere Kosten verursacht.

Es besteht der Wunsch, ein optisches Koordinatenmessgerät bereitzustellen, das bei vergleichsweise geringen Kosten ein großes Spektrum an optischen Messaufgaben ausführen kann. Dementsprechend ist es eine Aufgabe der vorliegenden Erfindung, ein entsprechendes Koordinatenmessgerät und ein entsprechendes Verfahren anzugeben.

Erfindungsgemäß wird das eingangs genannte Koordinatenmessgerät dahingehend weitergebildet, dass eine erste Linsengruppe von der Vielzahl von Linsengruppen im Bereich der Lichteintrittsöffnung feststehend angeordnet ist, das in dem Objektiv zwischen der ersten und einer zweiten Linsengruppe ein Freiraum ist, und dass das Koordinatenmessgerät des Weiteren einen Weislichtsensor und ein wahlweise in den Freiraum bewegbares, zumindest teilweise reflektierende Koppelelement zum Einkoppeln des Weißlichtsensors in das Objektiv aufweist.

Unter einem "Weißlichtsensor" ist im Rahmen der vorliegenden Anmeldung ein Sensor zu verstehen, der das Messobjekt mit Licht bestrahlt, das ein bestimmtes Wellenlängsspektrum aufweist, und der eine Lage zumindest eines Punktes des Messobjekts parallel zu der Längsachse durch Auswertung einer Intensitätsverteilung des von dem Messobjekt reflektierten oder gestreuten und von dem Sensor erfassten Lichts in dem Wellenlängenspektrum bestimmt. Dabei wird eine durch die Abbildung des Lichts verursachte chromatische Längsaberration und die sich daraus ergebenden unterschiedlichen Schnittweiten jeder Wellenlänge genutzt. Dabei ist es nicht zwingend, dass der Weißlichtsensor tatsächlich weißes Licht verwendet, also ein Wellenlängenspektrum von etwa 380 nm bis etwa 780 nm. Der Weißlichtsensor kann auch nur einen Teilbereich dieses Wellenlängenspektrums nutzen und/oder angrenzende Wellenlängen im ultravioletten Bereich unter 380 nm und/oder im infraroten Bereich über 780 nm.

Unter einem "Koppelelement" wird im Rahmen der vorliegenden Erfindung ein optisches Element verstanden, das einfallendes Licht zumindest teilweise reflektiert, d.h. zumindest ein Bruchteil von einfallendem Licht wird reflektiert. Grundsätzlich kann das Koppelelement einfallendes Licht vollständig reflektieren, d.h. ein Spiegel sein. In einer bevorzugten Ausgestaltung ist das Koppelelement jedoch ein Strahlteiler. Ein Strahlteiler kann derart ausgebildet sein, dass er einfallendes Licht zu 50% reflektiert und zu 50% hindurch lässt bzw. transmittiert. Auf diese Weise kann ein einfallender Lichtstrahl in zwei Lichtstrahlen gleicher Intensität geteilt werden.

In dieser Ausgestaltung besteht zwischen der ersten Linsengruppe und der verschiebbaren zweiten Linsengruppe ein definierter Mindestabstand, den die zweite Linsengruppe nicht unterschreiten kann. Der Freiraum macht es möglich, einen Strahlteiler im optischen Strahlengang unterzubringen und/oder die chromatische Baugruppe zwischen der ersten Linsengruppe und der zweiten Linsengruppe in das Objektiv einzubringen. Die Ausgestaltung erhöht die Flexibilität des neuen Objektivs, da sie insbesondere auch die Einkopplung von definierten Beleuchtungen für verschiedene Sensorprinzipien erleichtert.

Bei der ersten Linsengruppe handelt es sich also insbesondere um die am weitesten objektseitig angeordnete Linsengruppe des Objektivs. Die zweite Linsengruppe ist dann eine bildseitig von der ersten Linsengruppe, insbesondere nächstliegende Linsengruppe des Objektivs. Zwischen der ersten und der zweiten Linsengruppe befindet sich der Freiraum. In diesem Freiraum ist das Koppelelement wahlweise bewegbar. Man ist somit dazu in der Lage, wahlweise den Weißlichtsensor optisch in das Objektiv zwischen der ersten und zweiten Linsengruppe einzukoppeln. Ist das Koppelelement als Strahlteiler ausgeführt, wird auf diese Weise eine gleichzeitige Nutzung von einer zweidimensionalen Bildauswertung mittels der Kamera und eine Auswertung durch den Weißlichtsensor möglich. Dies alles mit einem kompakten Aufbau und einem gemeinsamen Strahlengang auf das Messobjekt.

Durch die Bewegbarkeit des Koppelelements ist es zudem möglich, das Koppelelement vollständig aus dem Freiraum herauszubewegen, so dass es den Strahlengang in dem Objektiv zwischen der ersten und der zweiten Linsengruppe nicht beeinflusst. Für den weiteren Strahlengang auf die Kamera kann dann die volle Intensität des durch die erste Linsengruppe einfallenden Lichts zur Verfügung gestellt werden.

Auf diese Weise wird es möglich, in einem Koordinatenmessgerät mit einem zweidimensional messenden optischen Sensor einen Weißlichtsensor in kompakter Bauform zur parallelen oder auch alternativen Verwendung vorzusehen. Die eingangs gestellte Aufgabe wird daher vollkommen gelöst.

In einer Ausgestaltung der Erfindung kann vorgesehen sein, dass das Koordinatenmessgerät ein Kollimationselement zwischen der ersten Linsengruppe und dem Koppelelement aufweist.

Das Kollimationselement dient dazu, aus dem konvergierenden bzw. divergierenden einfallenden Strahlenbündel nach der ersten Linsengruppe ein besser kollimiertes Strahlenbündel zu erzeugen. Nach dem Durchtritt durch das Kollimationselement liegt dann ein zumindest weitgehend kollimiertes Strahlenbündel vor, was die optische Weiterverarbeitung des einfallenden Lichts deutlich vereinfachen kann.

In einer weiteren Ausgestaltung kann dabei vorgesehen sein, dass das Kollimationselement mindestens ein optisches Element aufweist, das aus einer Gruppe bestehend aus einem refraktiven optischen Element, einem diffraktiven optischen Element und einem holographischen optischen Element ausgewählt ist.

Darüber hinaus ist grundsätzlich auch denkbar, dass das Kollimationselement durch mehrere optische Elemente gebildet ist, die aus einer beliebigen Kombination von refraktiven, diffraktiven und holografischen optischen Elementen ausgewählt sind.

Jede der genannten Arten von optischen Elementen kann in gewissen Anwendungsfällen vorteilhaft sein. Ein Kollimationselement, das aus mindestens einem refraktiven optischen Element gebildet ist, kann beispielsweise als gegebenenfalls sphärische Linse kostengünstig herstellbar sein. Ein diffraktives oder holographisches optisches Element hat ggf. einen geringeren Platzbedarf, insbesondere parallel zu der Längsachse bzw. der optischen Achse des Objektivs.

Mittels des Kollimationselements ist es grundsätzlich möglich, den Durchmesser des Strahlenbündels nach Durchtritt durch die erste Linsengruppe gering zu halten. Insbesondere kann dazu das Kollimationselement nahe an der ersten Linsengruppe angeordnet sein. Dadurch ergibt sich ein geringerer Durchmesser des Strahlenbündels und eine geringere Größe nachgeordneter optischer Elemente im Strahlengang zu dem Weißlichtsensor, insbesondere des Koppelelements und, wie im Folgenden noch erläutert wird, einer chromatischen Baugruppe.

In einer weiteren Ausgestaltung des Koordinatenmessgeräts kann vorgesehen sein, dass das Kollimationselement zusammen mit dem Koppelelement bewegbar ist.

Das Kollimationselement und das Koppelelement können somit gemeinsam einen bewegbaren bzw. verschwenkbaren Teil des Weißlichtsensors bilden, der wahlweise zwischen die erste und die zweite Linsengruppe in den Strahlengang des Objektivs bewegbar ist.

Dies ermöglicht einen konstruktiv und regelungstechnisch einfachen Aufbau. Des Weiteren kann in dem Fall, dass der Weißlichtsensor nicht verwendet wird, auch das Kollimationselement aus dem Strahlengang bewegt und die volle Lichtintensität auf der Kamera genutzt werden.

In einer weiteren Ausgestaltung des Koordinatenmessgeräts kann vorgesehen sein, dass das Koordinatenmessgerät des Weiteren eine Strahlführungsoptik zum Führen von Licht von dem Strahlteiler zu einer Auswertungseinheit des Weißlichtsensors aufweist.

Mittels der Strahlführungsoptik wird es möglich, den mittels des Koppelelements ausgekoppelten Anteil des in das Objektiv einfallenden Lichts wie gewünscht aus dem Objektivkörper hin zu einer Auswertungseinheit des Weißlichtsensors zu führen. Insbesondere in dem Fall der Verwendung von Lichtleitfasern zum Führen des Lichts kann mittels der Strahlführungsoptik eine Einkopplung des Lichtanteils in die Lichtleitfaser hergestellt werden.

In einer weiteren Ausgestaltung des Koordinatenmessgeräts kann vorgesehen sein, dass die Strahlführungsoptik zusammen mit dem Strahlteiler bewegbar ist und Licht von dem Strahlteiler in eine Lichtleitfaser führt, die derart angeordnet ist, dass sie die Strahlführungsoptik mit der Auswertungseinheit und einer Lichtquelle des Weißlichtsensors optisch verbindet.

Auf diese Weise wird es möglich, die Auswertungseinheit und eine Lichtquelle des Weißlichtsensors innerhalb des Koordinatenmessgeräts, jedoch entfernt von dem Objektiv anzuordnen. Eventuelle Wärmeentwicklungen einer Lichtquelle beeinflussen dann das Objektiv und beispielsweise die Kamera nicht. Auch kann beispielsweise auf diese Weise erreicht werden, dass die Lichtquelle und die Auswertungseinheit ortsfest angeordnet werden können und sich nicht an einer relativen Bewegung zwischen Werkstückträger und Messkopf beteiligen müssen, falls der Messkopf selbst bewegbar ist.

Bei der Lichtquelle des Weißlichtsensors muss es sich nicht zwingend um "weißes Licht" handeln. Es muss also nicht zwingend Licht im gesamten sichtbaren Spektrum von etwa 380 bis 780 nm emittiert werden. Es können auch nur Teilbereiche dieses Spektrums oder eine Vielzahl spezifischer Wellenlängen genutzt werden. Auch ist es grundsätzlich möglich, dass Wellenlängenbereiche im ultravioletten oder infraroten Spektrum, beispielsweise in einem Bereich von 300 bis 380 nm oder 780 bis 850 nm genutzt werden. Wichtig für die Funktionsfähigkeit des Weißlichtsensors ist lediglich, dass die Lichtquelle nicht monochromatisch arbeitet, sondern eine Mehrzahl von Wellenlängen bzw. einen Wellenlängenbereich bereitstellt.

In einer weiteren Ausgestaltung des Koordinatenmessgeräts kann vorgesehen sein, dass der Weißlichtsensor einen Strahlteiler aufweist, der einen Strahlengang von von der Lichtquelle emittiertem Licht in einen Strahlengang von auf die Auswertungseinheit einfallendem Licht zusammenführt.

Auf diese Weise kann ein optisch und konstruktiv einfacher kompakter Aufbau von Lichtquellenauswertungseinheit bereitgestellt werden.

In einer weiteren Ausgestaltung des Koordinatenmessgeräts kann vorgesehen sein, dass die erste Linsengruppe achromatisch ausgebildet ist.

Unter "achromatisch" ist dabei zu verstehen, dass die erste Linsengruppe hinsichtlich chromatischer Aberrationen korrigiert ist. Insbesondere verursacht die erste Linsengruppe keinerlei chromatische Längsaberration. Auch ein Farbquerfehler kann korrigiert sein.

Grundsätzlich wird gewünscht, dass das Objektiv eines zweidimensionalen optischen Sensors eine hohe Abbildungsgüte aufweist. Darunter wird auch verstanden, dass keinerlei chromatische Aberrationen auftreten. Dabei hat es sich als vorteilhaft erwiesen, jede Linsengruppe für sich genommen chromatisch zu korrigieren.

Auch in dem vorliegenden Koordinatenmessgerät kann die erste Linsengruppe achromatisch ausgebildet sein. Zwar ist für die Funktionalität eines Weißlichtsensors eine chromatische Längsaberration des auf das Messobjekt einfallenden Strahlenbündels notwendig, die Herbeiführung dieser chromatischen Längsaberration muss, da ohnehin ein Verschwenken von Teilen des Weißlichtsensors in den Strahlengang des Objektivs erfolgt, auch auf andere Weise herbeigeführt werden. Dies ermöglicht es, wenn der verschwenkbare Teil des Weißlichtsensors sich nicht in dem Strahlengang befindet, weiterhin mit einer chromatisch korrigierten ersten Linsengruppe zu arbeiten.

Wie bereits voranstehend ausgeführt wurde, wird unter der "ersten Linsengruppe" die am weitesten objektseitig, ggf. hinter einem Deckglas, angeordnete Linsengruppe verstanden.

In einer weiteren Ausgestaltung des Koordinatenmessgeräts kann vorgesehen sein, dass jede Linsengruppe der Vielzahl von Linsengruppe achromatisch ausgebildet ist.

Wie bereits voranstehend ausgeführt wurde, führt dies zu einem insgesamt chromatisch korrigierten Objektiv, das weder chromatische Längsaberrationen noch Farbquerfehler aufweisen kann.

In einer weiteren Ausgestaltung des Koordinatenmessgeräts kann vorgesehen sein, dass das Messgerät des Weiteren mindestens eine chromatische Baugruppe aufweist, die in den Freiraum bewegbar ist.

Grundsätzlich kann vorgesehen sein, dass lediglich eine einzige chromatische Baugruppe in dem Koordinatenmessgerät vorgesehen ist. Diese kann dann auch zusammen mit dem Koppelelement in den Freiraum bewegbar sein. Unter einer "chromatischen Baugruppe" wird im Rahmen der vorliegenden Erfindung mindestens ein optisches Element verstanden, das eine chromatische Längsaberration herbeiführt.

Die chromatische Baugruppe ermöglicht somit, eine chromatische Längsaberration nur wahlweise dann in den Strahlengang einzuführen, wenn auch der Weißlichtsensor verwendet werden soll. Es können darüber hinaus auch mehrere chromatische Baugruppen vorgesehen sein, von denen jeweils eine in den Freiraum bewegbar ist. Auf diese Weise kann das Maß der chromatischen Längsaberration bzw. die Schnittweitendifferenz zwischen größter und kleinster Wellenlänge und damit ein Arbeitsbereich parallel zu der Längsachse bzw. der optischen Achse des Objektivs beeinflusst werden.

Bei einer Ausgestaltung des Koordinatenmessgeräts kann vorgesehen sein, dass die chromatische Baugruppe aus einem einzigen Dispersionselement zum Herbeiführen einer chromatischen Längsaberration besteht.

Grundsätzlich kann ein einziges Dispersionselement ausreichend sein, um die gewünschte chromatische Längsaberration herbeizuführen.

Bei Verwendung eines einzigen Dispersionselements ergibt sich parallel zu der Längsachse ein nur geringer notwendiger Bauraum, der notwendig ist, um die vorgeschlagenen optischen Elemente zwischen der ersten Linsengruppe und der zweiten Linsengruppe anordnen zu können.

In einer Ausgestaltung des Koordinatenmessgeräts kann vorgesehen sein, dass das Dispersionselement ein diffraktives optisches Element oder ein holographisches optisches Element ist.

Die Ausgestaltung des Dispersionselements als diffraktives optisches Element oder holographisches optisches Element ermöglicht ebenfalls eine kompakte Bauform innerhalb des Freiraums zwischen der ersten und der zweiten Linsengruppe parallel zu der Längsrichtung des Objektivs.

In einer weiteren Ausgestaltung kann vorgesehen sein, dass das Objektiv eine Blende und zumindest vier Linsengruppen aufweist, wobei die Blende und eine zweite Linsengruppe, eine dritte Linsengruppe und eine vierte Linsengruppe von den mindestens vier Linsengruppen relativ zu der ersten Linsengruppe entlang der optischen Achse verschiebbar sind, wobei die zweite Linsengruppe zwischen der ersten Linsengruppe und der Blende angeordnet ist, und wobei die dritte und die vierte Linsengruppe zwischen der Blende und der Lichtaustrittsöffnung angeordnet sind.

Auf diese Weise wird ein Objektiv bereitgestellt, bei dem zumindest vier separate Linsengruppen auf einer gemeinsamen optischen Achse angeordnet sind. Die erste Linsengruppe (von der Lichteintrittsöffnung bzw. Frontseite her gesehen) ist feststehend. Dahinter folgen entlang der optischen Achse drei weitere Linsengruppen, die jeweils relativ zu der ersten Linsengruppe entlang der optischen Achse verschiebbar sind. Optional besitzt das Objektiv in einigen Ausgestaltungen eine fünfte Linsengruppe, die im Bereich der Lichtaustrittsöffnung angeordnet und feststehend ist. Die Linsengruppen erzeugen gemeinsam ein Bild auf einem Bildsensor, der über die Schnittstelle mit dem Objektiv gekoppelt ist. Aufgrund der individuellen Verschiebbarkeit der drei Linsengruppen kann das neue Objektiv sehr flexibel auf unterschiedliche Abbildungsverhältnisse eingestellt werden. Wie nachfolgend anhand eines bevorzugten Ausführungsbeispiels erläutert ist, ermöglicht das neue Objektiv insbesondere eine variable Einstellung der Vergrößerung und eine variable Einstellung des Arbeitsabstandes. In den bevorzugten Ausführungsbeispielen ist das neue Objektiv über den gesamten Einstellbereich der Vergrößerung und über den gesamten Einstellbereich des Arbeitsabstandes telezentrisch, was mit Hilfe der axial verschiebbaren Blende sehr gut erreicht werden kann. Die individuelle Verstellbarkeit der drei Linsengruppen macht es darüber hinaus möglich, eine gleichbleibende Vergrößerung über den gesamten Variationsbereich des Arbeitsabstandes oder eine gleichbleibende Fokussierung auf einen Arbeitsabstand über den gesamten Vergrößerungsbereich zu realisieren. Diese Eigenschaften machen es erstmals möglich, ein Messobjekt, das starke Höhendifferenzen parallel zur optischen Achse des Objektivs besitzt, mit gleichbleibenden Parametern zu vermessen, ohne dass der optische Sensor als solcher näher an das Messobjekt heran oder weiter von dem Messobjekt weg bewegt werden muss. Letzteres ermöglicht sehr schnelle Messungen an einer Vielzahl von Messpunkten. Die feststehende erste Linsengruppe besitzt darüber hinaus den Vorteil, dass die "Störkontur" des optischen Sensors im Messvolumen des Koordinatenmessgerätes stets gleich ist. Die Gefahr, dass der Sensor mit dem Messobjekt kollidiert, ist reduziert. Des Weiteren ermöglicht die variable Einstellbarkeit den Verzicht auf Wechseloptiken, die zum Teil bei bisherigen Koordinatenmessgeräten zum Einsatz kamen, um verschiedene Messaufgaben auszuführen.

In einer weiteren Ausgestaltung bestehen die erste, zweite, dritte und vierte Linsengruppe jeweils aus zumindest zwei Linsen. In den bevorzugten Ausführungsbeispielen beinhaltet jede Linsengruppe mindestens ein Kittglied, d.h. mindestens zwei Einzellinsen in jeder der vier Linsengruppen sind permanent und großflächig entlang ihrer optisch wirksamen Flächen verbunden.

Diese Ausgestaltung reduziert die Anzahl der Grenzflächen und trägt daher zu einer hohen Abbildungsgüte über einen großen spektralen Arbeitsbereich bei. In einem bevorzugten Ausführungsbeispiel bilden die vier Linsengruppen lediglich vierzehn Grenzflächen.

In einer weiteren Ausgestaltung des Koordinatenmessgeräts kann vorgesehen sein, dass mindestens zwei Linsengruppen parallel zur Längsachse verschiebbar sind.

Auf diese Weise kann beispielsweise die Möglichkeit bereitgestellt werden, dass eine Fokussierung des Objektivs und damit ein Arbeitsabstand des optischen Sensors bzw. der Kamera verändert oder sogar ein Abbildungsmaßstab des Objektivs verändert werden kann.

In einer weiteren Ausgestaltung besitzt das Objektiv ein separates Deckglas, das vor der ersten Linsengruppe im Bereich der Lichteintrittsöffnung angeordnet ist.

In dieser Ausgestaltung trifft Licht, das über die Lichteintrittsöffnung in den Strahlengang des Objektivs eintritt, zunächst auf das Deckglas und durchläuft erst anschließend die Reihe der Linsengruppen bis zur Lichtaustrittsöffnung. Die Anordnung eines separaten Deckglases vor der ersten Linsengruppe ist eine für Messobjekte ungewöhnliche Maßnahme, da das Deckglas in jedem Fall die optischen Eigenschaften des Objektivs bzw. dessen Strahlengang beeinflusst. In den bevorzugten Ausführungsbeispielen sind die optischen Eigenschaften des Deckglases daher bei der Korrektur der Linsengruppen berücksichtigt, d.h. das Deckglas ist in der Gesamtkorrektur des Objektivs enthalten. Die Bereitstellung eines separaten Deckglases vor der ersten Linsengruppe ist insbesondere dann ungewöhnlich, wenn die erste Linsengruppe zur Erzeugung eines definierten chromatischen Längsfehlers ausgebildet oder genutzt ist, was in bevorzugten Ausführungsbeispielen des neuen Objektivs der Fall ist. Die Ausgestaltung besitzt jedoch den Vorteil, dass ein separates Deckglas einfacher gereinigt und gegebenenfalls ausgewechselt werden kann, wenn die Lichteintrittsöffnung des Objektivs im alltäglichen Betrieb verschmutzt oder gar beschädigt wird. Dementsprechend ist das neue Objektiv in bevorzugten Ausführungsbeispielen so ausgebildet, dass das separate Deckglas reversibel und zerstörungsfrei lösbar im Objektivkörper gehalten ist.

In einer weiteren Ausgestaltung kann vorgesehen sein, dass das Koordinatenmessgerät ein diffraktives optisches Element oder ein holographisches optisches Element aufweist, das sowohl das Kollimationselement als auch das Dispersionselement bildet.

Insbesondere kann vorgesehen sein, dass dieses diffraktive oder holographische optische Element ebenfalls zusammen mit dem Koppelelement in den Freiraum bewegbar ist.

Das diffraktive oder holographische optische Element ist für eine kompakte Bauform des Koordinatenmessgeräts hilfreich, da es sowohl eine Brechkraft zur Kollimierung des Lichtstrahls als auch eine Dispersion bzw. chromatische Längsabweichung bereitstellen kann, und somit kann auf diese Weise axialer Bauraum im Objektiv eingespart werden.

In einer weiteren Ausgestaltung kann vorgesehen sein, dass eine dieses optische Element aufweisende und in den Freiraum verschwenkbare Baugruppe ebenfalls als zumindest teilweise reflektives Bauteil ausgebildet ist. Dazu kann beispielsweise das Koppelelement zusammen mit diesem optischen Element verschwenkbar sein. Insbesondere kann es sich bei dem diffraktiven optischen Element um ein Blazegitter handeln. Ein Blazegitter weist für einen gewünschten Wellenlängenbereich einen maximalen Beugungswirkungsgrad auf. Der Wellenlängenbereich kann dabei dem von der Lichtquelle emittierten Spektrum entsprechen.

Auf diese Weise kann wiederum insgesamt eine kompakte Bauform in axialer Richtung, d.h. parallel zu der Längsrichtung des Objektivs, erreicht werden. Für die Verwendung des Kollimationselements bereits hinter der ersten Linsengruppe und vor einer signifikanten Strahlaufweitung, können alle nachfolgenden Baugruppen, d.h. die Strahlführungsoptik, der Streitteiler und die chromatische Baugruppe bzw. das Dispersionselement ebenfalls mit kleineren optischen Durchmessern ausgeführt werden. Dies kann wiederum den Platzbedarf parallel zur Längsrichtung des Objektivs minimieren, da im Falle von verwendeten refraktiven optischen Elementen die Mittendicken bei konvexen Linsenfläche und/oder die Randdicken bei konkaven Linsenflächen aufgrund des transversal geringeren Durchmessers klein sind.

In einer weiteren Ausgestaltung definieren die erste und die zweite Linsengruppe zusammen einen Brennpunkt, der zwischen der zweiten und der dritten Linsengruppe liegt, wobei die Steuerkurve für die Blende und die Steuerkurve für die zweite Linsengruppe so aufeinander abgestimmt sind, dass die Blende stets in dem Brennpunkt angeordnet ist.

Diese Ausgestaltung sichert dem neuen Objektiv trotz der flexiblen Variationsmöglichkeiten eine zumindest objektseitige Telezentrie über sämtliche Vergrößerungen und Arbeitsabstände. Die objektseitige Telezentrie ist vorteilhaft, um insbesondere die Tiefe von Bohrungen, Vorsprüngen oder Ausnehmungen an einem Messobjekt zu bestimmen, weil der "Blick" auf das Messobjekt trotz der in diesen Fällen unterschiedlichen Arbeitsabstände weitgehend gleichbleibt. Vorteilhaft wird durch eine objektseitige Telezentrie eine perspektivische Verzerrung des Messobjekts vermieden.

In einer weiteren Ausgestaltung besitzt die Blende eine variable Blendenöffnung, die vorzugsweise in Abhängigkeit von der Position der Blende entlang der optischen Achse variiert.

In dieser Ausgestaltung besitzt das neue Objektiv einen weiteren Freiheitsgrad, nämlich die Öffnung der Blende. Diese macht es möglich, die numerische Apertur des Objektivs zu verändern und so die erreichbare Auflösung des Objektivs zu variieren. In bevorzugten Ausführungsbeispielen sind die oben erwähnten Steuerkurven einschließlich der individuellen Steuerkurve für die Blendenöffnung so ausgebildet, dass das Objektiv einen Betriebsmodus mit einer konstanten bildseitigen Apertur über verschiedene Arbeitsabstände bietet. Dieser Betriebsmodus ist vorteilhaft, um über verschiedene Arbeitsabstände mit einer gleichbleibend hohen Messgenauigkeit arbeiten zu können.

In den bevorzugten Ausführungsbeispielen liegt die Blende zentrisch zur optischen Achse, und zwar mit einem Zentrierfehler, der geringer als 20 µm ist und vorzugsweise weniger als 10 µm beträgt. Vorzugsweise ist die Blende eine Irisblende, die individuell motorisch ansteuerbar ist, wobei die Ansteuerung unter Verwendung einer Steuerkurve erfolgt, die zu der oben erwähnten Kurvenschar gehört. Diese Ausführungsbeispiele ermöglichen eine einfache Implementierung und eine gleichbleibend hohe Messgenauigkeit über den gesamten Arbeitsbereich.

In einer weiteren Ausgestaltung weist das Objektiv eine Vielzahl von Schlitten und motorischen Antrieben auf, wobei die zweite, dritte und vierte Linsengruppe und die Blende jeweils mit einem eigenen Schlitten gekoppelt sind, der entlang der optischen Achse verstellbar ist, und wobei die Schlitten mit Hilfe der motorischen Antriebe individuell verfahrbar sind.

In dieser Ausgestaltung sind die entlang der optischen Achse verstellbaren Elemente jeweils mit einem eigenen Antrieb gekoppelt. In einigen Ausführungsbeispielen ist der Antrieb ein Schrittmotor, der vorzugsweise im Vollschrittbetrieb arbeitet, da dies einen geringen Wärmeeintrag in das Objektiv zur Folge hat. Die Ausgestaltung ermöglicht eine modulare und vergleichsweise kostengünstige Realisierung. Als Alternative können auch Gleichstrommotoren, sowohl in bürstenbehafteter als auch bürstenloser Ausführung, verwendet werden.

In einer weiteren Ausgestaltung besitzt die erste Linsengruppe eine positive Brechkraft. Vorzugsweise besitzt die zweite Linsengruppe eine negative Brechkraft, die dritte Linsengruppe eine positive Brechkraft und die vierte Linsengruppe eine negative Brechkraft.

Diese Ausgestaltung hat sich in praktischen Versuchen als sehr vorteilhaft erwiesen, um eine kompakte Bauform und eine geringe Störkontur des Objektivs im Messvolumen des neuen Koordinatenmessgerätes zu erreichen.

In weiteren Ausführungsbeispielen kann über die weitere Schnittstelle ein Streifenmuster oder eine andere strukturierte Beleuchtung eingekoppelt werden, die beispielsweise anhand des von der Kamera aufgenommenen Bildes analysiert wird, um ein Messobjekt zu vermessen. Vorzugsweise ist zwischen der vierten Linsengruppe und der Lichtaustrittsöffnung des Objektivs ein weiterer Freiraum vorgesehen, in dem ebenfalls ein Strahlteiler angeordnet ist. Bevorzugt ist eine dritte Schnittstelle auf Höhe des weiteren Strahlteilers angeordnet, so dass auch hinter dem optischen System aus den vier Linsengruppen die Ein- und Auskopplung von Beleuchtung und/oder Signalen möglich ist. Die Flexibilität und der Einsatzbereich des neuen Objektivs und des entsprechenden Koordinatenmessgerätes werden damit noch weiter erhöht.

In einer weiteren Ausgestaltung kann vorgesehen sein, dass das Objektiv und der Weißlichtsensor derart ausgelegt sind, dass eine numerische Apertur des Objektivs geringer als eine numerische Apertur des Weißlichtsensors ist.

Beispielsweise kann das Objektiv für eine numerische Apertur von etwa 0,2 ausgelegt sein. Der Weißlichtsensor, der insbesondere die zwischen der ersten Linsengruppe und der zweiten Linsengruppe des Objektivs eingekoppelt wird und somit die erste Linsengruppe nutzt, kann mit einer numerischen Apertur von 0,4 bis zu 0,7 ausgelegt sein. Dies ermöglicht bei der Verwendung des Weißlichtsensors kürzere Arbeitsabstände und eine noch höhere Auflösung als bei einer normalen Verwendung des gesamten Objektivs.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel eines Koordinatenmessgerätes in einer Ansicht von schräg vorne,
- Fig. 2: eine schematische Darstellung des Objektivs aus dem Koordinatenmessgerät aus Fig. 1,
- Fig. 3: ein Schnittbild der Linsengruppen des Objektivs aus Fig. 2 gemäß einem bevorzugten Ausführungsbeispiel, wobei die Linsengruppen in fünf verschiedenen Arbeitspositionen dargestellt sind, die unterschiedliche Vergrößerungen bei jeweils gleichem Arbeitsabstand repräsentieren,
- Fig. 4: ein weiteres Schnittbild des Objektivs aus Fig. 2 mit fünf verschiedenen Arbeitspositionen, die fünf verschiedene Vergrößerungen bei einem anderen Arbeitsabstand als in Fig. 3 repräsentieren,
- Fig. 5: ein weiteres Schnittbild des Objektivs aus Fig. 2, wobei die Position der Linsengruppen entlang der optischen Achse bei jeweils gleicher Vergrößerung für fünf verschiedene Arbeitsabstände dargestellt ist,
- Fig. 6: ein schematisch dargestelltes Ausführungsbeispiel eines Koordinatenmessgeräts,
- Fig. 7: ein weiteres schematisch dargestelltes Ausführungsbeispiel eines Koordinatenmessgeräts, und
- Fig. 8: noch ein weiteres schematisch dargestelltes Ausführungsbeispiel eines Koordinatenmessgeräts.

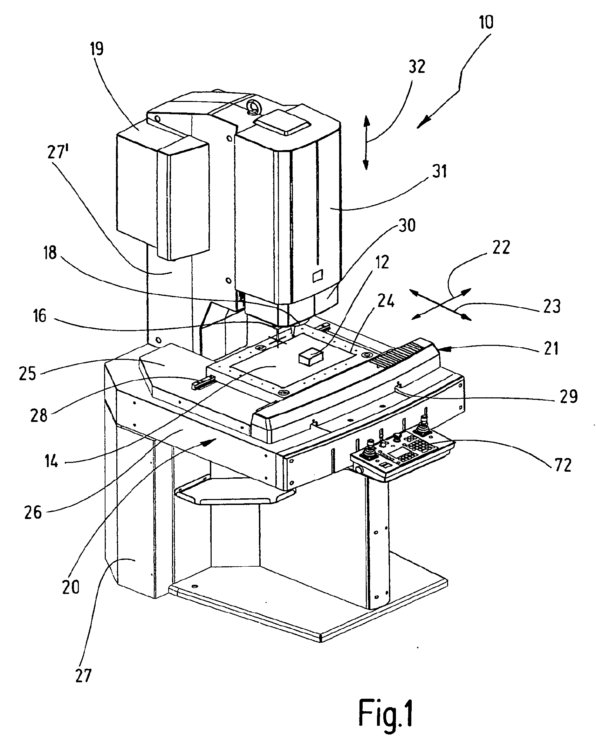

Die Fig. 1 zeigt eine Vorrichtung 10 zum Inspizieren eines Messobjekts 12, das auf einem Werkstückträger 14 angeordnet ist. In der dargestellten Ausführungsform handelt es sich bei der Vorrichtung 10 um ein Koordinatenmessgerät. Das Messobjekt 12 wird mittels eines oder mehrerer optischer Sensoren 18 vermessen. Wahlweise kann zusätzlich auch einer oder mehrere taktile Sensoren 16 vorgesehen sein.

Koordinatenmessgeräte sind im Stand der Technik allgemein bekannt. Sie dienen dazu, beispielsweise im Rahmen einer Qualitätssicherung Werkstücke zu überprüfen oder die Geometrie eines Werkstücks vollständig im Rahmen eines sogenannten "Reverse Engineering" zu ermitteln. Darüber hinaus sind vielfältige weitere Anwendungsmöglichkeiten denkbar, so beispielsweise auch der zusätzliche Einsatz zum Inspizieren von Oberflächen.

In derartigen Koordinatenmessgeräten können verschiedene Arten von Sensoren zur Anwendung kommen, um die Koordinaten eines zu vermessenden Werkstücks zu erfassen. Beispielsweise sind hierzu taktil messende Sensoren bekannt, wie sie etwa von der Anmelderin unter der Produktbezeichnung "VAST", "VAST XT" oder "VAST XXT" vertrieben werden. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sogenannten "Scanning-Verfahrens" eine Vielzahl von Messpunkten in festgelegten zeitlichen Abständen erfasst werden kann.

Darüber hinaus ist es bekannt, optische Sensoren einzusetzen, die ein berührungsloses Erfassen der Koordinaten eines Werkstücks ermöglichen. Ein Beispiel für einen derartigen optischen Sensor ist der unter der Produktbezeichnung "ViScan" von der Anmelderin vertriebene optische Sensor.

Die Sensoren können dann in verschiedenen Arten von Messaufbauten verwendet werden. Ein Beispiel für einen solchen Messaufbau ist ein Tischaufbau, wie er in der Fig. 1 gezeigt ist. Ein Beispiel für einen solchen Tischaufbau ist das Produkt "O-INSPECT" der Anmelderin. Bei einem derartigen Gerät finden sowohl ein optischer Sensor als auch ein taktiler Sensor Anwendung, um verschiedene Prüfaufgaben an einer Maschine und idealerweise mit einer einzigen Aufspannung eines zu vermessenden Werkstücks durchzuführen. Auf diese Weise lassen sich einfach viele Prüfaufgaben beispielsweise in der Medizintechnik, der Kunststofftechnik, der Elektronik und der Feinmechanik durchführen. Selbstverständlich sind darüber hinaus auch verschiedene andere Aufbauten denkbar.

Derartige Sensorsysteme bzw. Sensorköpfe, die sowohl taktile als auch optische Sensoren tragen, finden in der Koordinatenmesstechnik zunehmend Bedeutung. Eine Kombination taktiler und optischer Sensoren ermöglicht es, in einem einzigen Koordinatenmessgerät die Vorteile der hohen Genauigkeit eines taktilen Messsystems mit der Geschwindigkeit eines optischen Messsystems zu kombinieren. Des Weiteren werden Kalibriervorgänge bei Sensorwechseln vermieden, ebenso wie ein eventuelles Umspannen eines Werkstücks.

Klassischerweise ist der Sensorkopf, der auch als Sensorsystem bezeichnet werden kann, mit einem Trägersystem verbunden, welches das Sensorsystem stützt und bewegt. Im Stand der Technik sind verschiedene Trägersysteme bekannt, beispielsweise Portalsysteme, Ständer-, Horizontalarm- und Armsysteme, alle Arten von Robotersystemen und letztlich geschlossene CT-Systeme bei mit Röntgenstrahlen arbeitenden Sensorsystemen. Die Trägersysteme können dabei des Weiteren Systemkomponenten aufweisen, die ein möglichst flexibles Positionieren des Sensorkopfs ermöglichen. Ein Beispiel hierfür ist das unter der Bezeichnung "RDS" vertriebene Dreh-Schwenk-Gelenk der Anmelderin. Darüber hinaus können verschiedene Adapter vorgesehen sein, um die unterschiedlichen Systemkomponenten des Trägersystems untereinander und mit dem Sensorsystem zu verbinden.

Der Einsatz der Vorrichtung 10 und das Koordinatenmessgerät 100 sind somit nicht auf den in der Fig. 1 dargestellten Tischaufbau und das entsprechende Trägersystem beschränkt, sondern können auch mit allen anderen Arten von Trägersystemen Verwendung finden. Des Weiteren kann die Vorrichtung 10 auch allgemein in Multi-Sensor-Messsystemen oder auch in einem Materialmikroskop Anwendung finden.

Die Vorrichtung 10 weist des Weiteren einen Messtisch 20 auf. An dem Messtisch 20 befindet sich eine Positioniereinrichtung 21. Diese ist insbesondere dazu vorgesehen, um das Messobjekt 12 parallel zu einer X-Achse 19 und zu einer Y-Achse 23 zu positionieren. Die X-Achse 19 und die Y-Achse 23 spannen dabei eine Messebene auf.

Zur Positionierung können beispielsweise ein X-Tisch 24 und ein Y-Tisch 25 vorgesehen sein. Der X-Tisch 24 ist parallel zu der X-Achse 21 und der Y-Tisch 25 ist parallel zu der Y-Achse 19 bewegbar. Beide sind auf einer Grundplatte 26 angeordnet. Die Grundplatte 54 wird von einem Maschinengestell 27 bzw. 27' getragen.

Die Bewegung des X-Tisches 24 und des Y-Tisches 25 wird durch Linearführungen in X-Richtung 28 und in Linearführungen in Y-Richtung 29 geführt. Dieser Aufbau entspricht dem sogenannten "Tischaufbau". Wie voranstehend ausgeführt wurde, sind auch andere Trägersysteme denkbar.

Die Vorrichtung 10 weist des Weiteren einen Messkopf 15 auf. An dem Messkopf 15 können einer oder mehrere taktile Sensoren 16 angeordnet sein. Des Weiteren ist an dem Messkopf 15 die Vorrichtung 10 angeordnet. Darüber hinaus können auch noch einer oder mehrere weitere optische Sensoren 18 an oder in dem Messkopf 16 angeordnet sein. Der Messkopf 15 dient also dazu, den einen oder mehrere optische Sensoren 18 und eventuell einen taktilen Sensor 16 mit einer Trägerstruktur, beispielsweise einem Z-Schlitten 30, zu koppeln. Bei dem Messkopf 15 kann es sich um einen geschlossenen Gehäuseaufbau handeln, er kann jedoch auch offen ausgebildet sein. Beispielsweise kann der Messkopf 15 auch die Form einer einfachen Platte aufweisen, an der der eine oder mehrere optische Sensoren 18 und eventuell der taktile Sensor 16 befestigt ist. Darüber hinaus sind auch alle weiteren möglichen Formen zum Koppeln des einen oder der mehreren optische Sensoren 18 und eventuell des taktilen Sensor 16 mit der Trägerstruktur denkbar.

Der Messkopf 15 ist an dem Z-Schlitten 30 gehalten, der in einem Schlittengehäuse 31 parallel zu einer Z-Achse 32 geführt ist. Diese Z-Achse 32 steht senkrecht auf der X-Achse 22 und auf der Y-Achse 23. Die X-Achse 22, die Y-Achse 23 und die Z-Achse 32 bilden somit ein kartesisches Koordinatensystem.

Die Vorrichtung 10 weist des Weiteren ein Bedienpult 33 auf. Mit dem Bedienpult 72 können die einzelnen Elemente der Vorrichtung 10 angesteuert werden. Des Weiteren können Eingaben an der Vorrichtung 10 vorgegeben werden. Grundsätzlich kann auch vorgesehen sein, dass in dem Bedienpult 33 oder an anderer Stelle eine Anzeigevorrichtung (nicht dargestellt) angeordnet ist, um Messwertausgaben an einen Nutzer der Vorrichtung 10 zu richten.

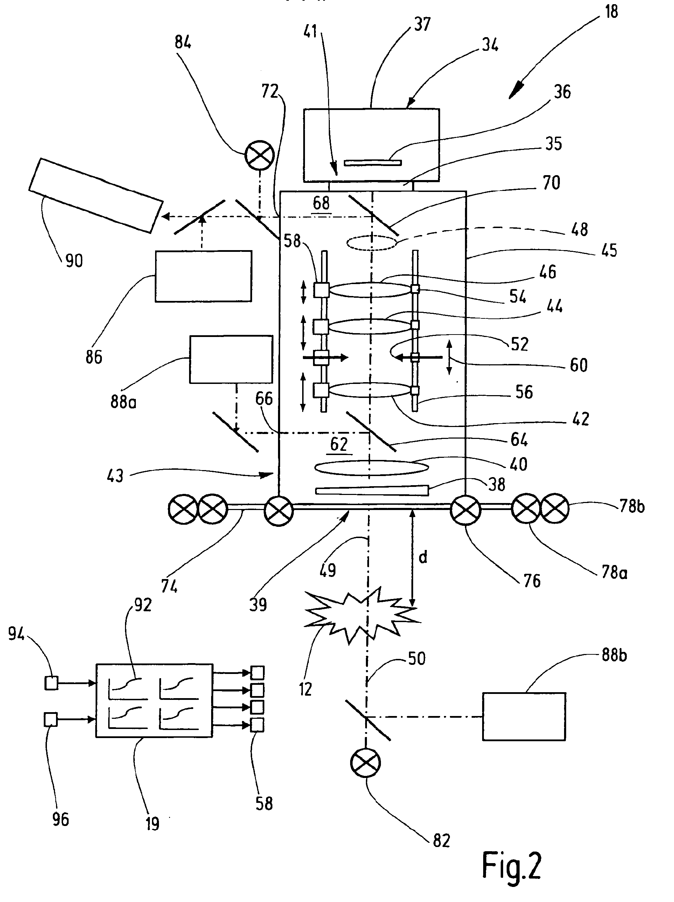

Fig. 2 zeigt ein Ausführungsbeispiel des optischen Sensors 18, wobei der optische Sensor 18 in diesem Ausführungsbeispiel genau genommen mehrere optische Sensoren beinhaltet, die wahlweise vorhanden und verwendet sein können. Das neue Objektiv kann darüber hinaus mit weiteren optischen Sensoren kombiniert werden, etwa mit einem deflektometrisch messenden Sensor.

Der Sensor 18 beinhaltet ein Objektiv 43 mit einem Objektivkörper 45. In typischen Ausführungsbeispielen ist der Objektivkörper 45 ein Tubus mit einer Lichteintrittsöffnung 39 und einer Lichtaustrittsöffnung 41, die an gegenüberliegenden Enden des Tubus angeordnet sind. Prinzipiell kann der Objektivkörper 45 jedoch auch eine von einem Tubus abweichende Form haben.

An der Lichtaustrittsöffnung 41 ist eine Schnittstelle 35 ausgebildet, die zum Anschluss einer Kamera 34 mit einem Bildsensor 36 dient. In bevorzugten Ausführungsbeispielen ist die Schnittstelle 35 eine standardisierte bzw. verbreitete Schnittstelle zur Kopplung von Kameras und Objektiven, etwa ein sogenannter F-Mount oder ein sogenannter C-Mount. In einigen Ausführungsbeispielen ist die Schnittstelle 35 jedoch eine proprietäre Schnittstelle, die es insbesondere möglich macht, das Gehäuse 37 der Kamera 34 direkt mit dem Objektivkörper 45 zu verbinden. Prinzipiell können auch andere standardisierte oder proprietäre Schnittstellen zum Anschluss der Kamera 34 an den Objektivkörper 45 verwendet sein.

Im Bereich der Lichteintrittsöffnung 39, die das distale Ende des Objektivs 43 definiert, ist ein Deckglas 38 im Objektivkörper 45 oder am Objektivkörper 45 angeordnet. In einigen Ausführungsbeispielen kann das Deckglas 38 ein Schraubglas sein, das in eine Gewindefassung am distalen Ende des Objektivkörpers 45 eingeschraubt wird. In anderen Ausführungsbeispielen kann das Deckglas 38 in eine geeignete Ausnehmung am Objektivkörper 45 eingeschoben, eingeklipst, eingeklebt oder anderweitig mit dem Objektivkörper 45 ortsfest verbunden sein. In den bevorzugten Ausführungsbeispielen ist das Deckglas 38 so mit dem Objektivkörper 45 verbunden, dass ein Anwender des Koordinatenmessgerätes 10 das Deckglas 38 ohne eine Beschädigung des Objektivs 43 austauschen kann.

In dem dargestellten Ausführungsbeispiel ist das Deckglas 38 eine keilförmige Glasplatte, deren Dicke von einem Rand zum anderen Rand zunimmt, wie dies in der vereinfachten Schnittdarstellung der Fig. 2 dargestellt ist. Das Deckglas 38 besitzt in diesem Fall einen Keilwinkel, der so gewählt ist, dass ein Reflex an der vorderen (zum distalen Ende des Objektivs 43 hin) oder der hinteren Seite des Deckglases 38 nicht auf den Bildsensor 36 der Kamera 34 gelangt. Im dargestellten Ausführungsbeispiel ist das Deckglas 38 so angeordnet, dass seine vordere Seite geneigt bzw. schräg zu der Lichteintrittsöffnung 39 liegt, während die hintere Seite ebenfalls leicht schräg dazu angeordnet ist.

In anderen Ausführungsbeispielen könnte ein Deckglas mit planparallelen Vorder- und Rückseiten leicht schräg zum Bildsensor 36 bzw. der nachfolgend noch näher erläuterten optischen Achse des Objektivs 43 angeordnet sein.

In weiteren Ausführungsbeispielen kann das Deckglas 38 in Form einer dünnen Folie realisiert sein, die im Bereich der Lichteintrittsöffnung 39 des Objektivs 43 eingespannt ist. In einigen Ausführungsbeispielen kann das Deckglas polarisierend sein, so dass das durchtretende Licht polarisiert wird, und/oder das Deckglas kann ein Farbfilter zur Unterdrückung von Umgebungslicht beinhalten.

Im dargestellten Ausführungsbeispiel ist zwischen dem Deckglas 38 und der Lichtaustrittsöffnung 41 des Objektivs 43 ein Linsensystem mit einer ersten Linsengruppe 40, einer zweiten Linsengruppe 42, einer dritten Linsengruppe 44 und einer vierten Linsengruppe 46 angeordnet. In einigen Ausführungsbeispielen ist zwischen der vierten Linsengruppe 46 und der Lichtaustrittsöffnung 41 noch eine fünfte Linsengruppe angeordnet, die hier in gestrichelten Linien dargestellt ist. Die Linsengruppen 40-48 sind in dem Objektivkörper 45 hintereinander zwischen der Lichteintrittsöffnung 39 und der Lichtaustrittsöffnung 41 entlang einer Längsachse 49 des Objektivkörpers 45 angeordnet. Im dargestellten Ausführungsbeispiel erfährt ein die Linsengruppen 40-48 in ihrer jeweiligen Mitte oder Zentrum durchtretender Lichtstrahl keine Ablenkung, so dass die Längachse 49 mit einer optischen Achse 50 des Objektivs 43 zusammenfällt.

Zwischen der zweiten Linsengruppe 42 und der dritten Linsengruppe 44 ist eine Blende 52 angeordnet. In den bevorzugten Ausführungsbeispielen ist die Blende 52 eine Irisblende, d.h. eine Blende, deren lichter Innendurchmesser variiert werden kann.

Die zweite, dritte und vierte Linsengruppe 42, 44, 46 sowie die Blende 52 sind jeweils mit einem eigenen Schlitten 54 gekoppelt, der entlang von zwei Führungsschienen 56 bewegt werden kann. Ferner sind die drei Linsengruppen und die optische Blende 52 in diesem Ausführungsbeispiel jeweils mit einem elektrischen Antrieb 58 gekoppelt. Mit Hilfe der Antriebe 58 können die zweite, dritte und vierte Linsengruppe sowie die Blende 52 parallel zur optischen Achse 50 verfahren werden, wie das anhand der Pfeile 60 angedeutet ist. Im Gegensatz dazu ist die erste Linsengruppe 40 und die optionale fünfte Linsengruppe 48 in den bevorzugten Ausführungsbeispielen ortsfest in dem Objektivkörper 45 angeordnet.

Wie man in der Fig. 2 erkennen kann, ist bei einigen Ausführungsbeispielen ein Freiraum 62 zwischen der ersten Linsengruppe 40 und der zweiten Linsengruppe 42 vorhanden, der selbst dann bleibt, wenn die zweite Linsengruppe 42 auf einen minimalen Abstand zur ersten Linsengruppe 40 positioniert wurde. In den bevorzugten Ausführungsbeispielen ist ein Strahlteiler 64 in dem Freiraum 62 auf der optischen Achse 50 angeordnet, um wahlweise Licht von einer weiteren Schnittstelle 66 des Objektivs 43 ein- oder auszukoppeln. In den bevorzugten Ausführungsbeispielen ist die zweite Schnittstelle 66 etwa auf Höhe des Strahlteilers 64 am seitlichen Umfang des Objektivkörpers 45 angeordnet.

In ähnlicher Weise ist in einigen Ausführungsbeispielen des Objektivs 43 ein weiterer Freiraum 68, in dem ebenfalls ein Strahlteiler 70 angeordnet ist, zwischen der vierten Linsengruppe 46 und der Lichtaustrittsöffnung 41. Auf Höhe des Strahlteilers 70 befindet sich eine weitere Schnittstelle 72, über die Licht ein- und/oder ausgekoppelt werden kann. In dem dargestellten Ausführungsbeispiel ist der Strahlteiler 70 zwischen der fünften Linsengruppe 48 und der Lichtaustrittsöffnung 41 angeordnet. Alternativ oder ergänzend hierzu könnte der Strahlteiler 70 zwischen der vierten Linsengruppe 46 und der fünften Linsengruppe 48 angeordnet sein, was natürlich einen entsprechenden Freiraum voraussetzt.

In bevorzugten Ausführungsbeispielen besitzt das Objektiv 43 im Bereich der Lichteintrittsöffnung 39 einen Halter 74, an dem verschiedene Lichtquellen 76, 78 angeordnet sind. In dem dargestellten Ausführungsbeispiel trägt der Halter 74 ein Ringlicht mit einer Vielzahl von Lichtquellen 78a, 78b, die rund um den Objektivkörper 45 mit verschiedenen radialen Abständen angeordnet sind. In einigen Ausführungsbeispielen sind die Lichtquellen 78a, 78b in der Lage, verschiedenfarbiges Licht zu erzeugen, etwa weißes Licht, rotes Licht, grünes Licht und blaues Licht sowie Mischungen davon. Die Lichtquellen 78a, 78b können dazu verwendet werden, unterschiedliche Beleuchtungsszenarien in unterschiedlichen Abständen vor der Lichteintrittsöffnung 39 zu erzeugen. Beispielhaft ist bei der Bezugsziffer 12 ein Messobjekt 12 schematisch angedeutet, das in einem Abstand d zu der Lichteintrittsöffnung 39 des Objektivs 43 positioniert ist. Der Abstand d repräsentiert einen Arbeitsabstand zwischen dem Objektiv 43 und dem Messobjekt 12, wobei dieser Arbeitsabstand anhand der Fokussierung des Objektivs 43 variabel einstellbar ist.

Die Lichtquellen 76 sind im vorliegenden Ausführungsbeispiel Lichtquellen, die in den Objektivkörper 45 integriert sind. In einigen Ausführungsbeispielen sind die Lichtquellen 76 außerhalb des Linsensystems in den Objektivkörper 45 integriert, wie dies in Fig. 2 dargestellt ist. In anderen Ausführungsbeispielen (alternativ oder ergänzend) können Lichtquellen 76 so in den Objektivkörper 45 integriert sein, dass das von den Lichtquellen 76 erzeugte Licht zumindest durch einige der Linsengruppen und gegebenenfalls das Deckglas 38 hindurch aus dem Objektivkörper 45 austritt. In diesem Fall ist die Lichteintrittsöffnung 39 gleichzeitig auch eine Lichtaustrittsöffnung.

Mit den Lichtquellen 76, 78 ist es möglich, das Messobjekt 12 variabel zu beleuchten, um wahlweise eine Hellfeld- und/oder eine Dunkelfeldbeleuchtung zu erzeugen. In beiden Fällen handelt es sich um Auflicht, das aus Richtung des Objektivs 43 auf das Messobjekt 12 trifft.

Darüber hinaus besitzt das Koordinatenmessgerät 10 in bevorzugten Ausführungsbeispielen eine weitere Lichtquelle 82, die eine Durchlichtbeleuchtung des Messobjekts 12 ermöglicht. Dementsprechend ist die Lichtquelle 82 unterhalb des Messobjekts 12 bzw. unterhalb der Werkstückaufnahme des Koordinatenmessgerätes 10 angeordnet. In den bevorzugten Ausführungsbeispielen besitzt das Koordinatenmessgerät 10 daher eine Werkstückaufnahme 12, die mit einer Glasplatte versehen ist, um die Durchlichtbeleuchtung zu ermöglichen.

Schließlich besitzt der optische Sensor 18 in diesen Ausführungsbeispielen eine Auflichtbeleuchtungseinrichtung 84, die hier über einen weiteren Strahlteiler mit der Schnittstelle 72 gekoppelt sein kann. Die Lichtquelle 84 kann über die Schnittstelle 72 und den Strahlteiler 70 Licht in den gesamten Strahlengang des Objektivs 43 einkoppeln. Das eingekoppelte Licht wird hier über das Linsensystem der ersten bis vierten (fünften) Linsengruppe auf das Messobjekt 12 geworfen.

In gleicher Weise können verschiedene Beleuchtungen über die Schnittstelle 66 und prinzipiell auch über die Lichtaustrittsöffnung 41 in den Strahlengang des Objektivs 43 eingekoppelt werden. Beispielhaft ist ein Gitterprojektor bei der Bezugsziffer 86 dargestellt. Der Gitterprojektor erzeugt ein strukturiertes Lichtmuster, das in diesem Ausführungsbeispiel über zwei Strahlteiler und die Schnittstelle 72 in den Strahlengang des Objektivs 43 eingekoppelt wird. In einigen Ausführungsbeispielen kann eine Lichtquelle ein Laserpointer sein, mit dem einzelne Messpunkte an dem Messobjekt 12 gezielt beleuchtet werden können. In anderen Ausführungsbeispielen kann eine Lichtquelle ein strukturiertes Lichtmuster, etwa ein Streifenmuster oder Gittermuster, erzeugen, welches über das Linsensystem des Objektivs 43 auf das Messobjekt 12 projiziert wird.

Wie in Fig. 2 dargestellt ist, kann das Objektiv 43 auf verschiedene Weise mit optischen Sensoren kombiniert werden, die alternativ oder ergänzend zu der Kamera 34 zur optischen Vermessung des Messobjekts 12 dienen. In der Figur 2 ist lediglich beispielhaft ein erster konfokaler Weißlichtsensor 88a an die Schnittstelle 66 angekoppelt. Alternativ oder ergänzend kann ein konfokaler Weißlichtsensor 88b beispielsweise über einen Strahlteiler in den Beleuchtungspfad für die Durchlichtbeleuchtung 82 eingekoppelt werden. Die Sensoren 88a und 88b können eine punktförmige Messung durchführen. Wie im Folgenden noch erläutert wird, wird vorliegend jedoch unter Nutzung des Freiraums 62 eine neue Art der optischen Abstandmessung vorgeschlagen.

Mit der Bezugsziffer 90 ist ein Autofokussensor bezeichnet, mit dessen Hilfe die Höhenlage des Messobjekts 12 parallel zur optischen Achse 50 anhand einer Bestimmung der Fokuslage ermittelt werden kann. Darüber hinaus ist eine optische Vermessung des Messobjekts 12 mit Hilfe der Kamera 34 und einer geeigneten Bildauswertung möglich, wie dies den einschlägigen Fachleuten auf diesem Gebiet bekannt ist.

Das Objektiv 43 besitzt in den bevorzugten Ausführungsbeispielen aufgrund der verfahrbaren Linsengruppen 42, 44, 46 und der verstellbaren Blende 52 einen großen Einsatzbereich. In den bevorzugten Ausführungsbeispielen ist eine Vielzahl von Steuerkurven 92 in einem Speicher der Auswerte- und Steuereinheit 19 oder einem anderen geeigneten Speicher hinterlegt. Die Vielzahl der Steuerkurven 92 bildet in den bevorzugten Ausführungsbeispielen eine 2D-Kurvenschar, mit deren Hilfe die Vergrößerung und die Fokussierung des Objektivs 43 in zahlreichen frei wählbaren Kombinationen eingestellt werden kann. In dem dargestellten Ausführungsbeispiel kann ein Anwender eine gewünschte Vergrößerung 94 und eine gewünschte Fokussierung 96 in die Auswerte- und Steuereinheit 19 eingeben. Die Auswerte- und Steuereinheit 19 bestimmt mit Hilfe der Steuerkurven 92 und in Abhängigkeit der gewünschten Vergrößerung 94 und gewünschten Fokussierung 96 individuelle Positionen der zweiten, dritten und vierten Linsengruppe entlang der optischen Achse 50 sowie eine individuelle Position und Öffnung der Blende 52. In einigen Ausführungsbeispielen des neuen Verfahrens kann der Anwender durch Variieren der Fokussierung den Arbeitsabstand d zu einem Messobjekt variieren, ohne dass der Sensor 18 mit Hilfe der Pinole 14 relativ zu dem Messobjekt bewegt werden muss. Beispielsweise ist es so möglich, Strukturen an der Oberfläche eines Messobjekts 12 und Strukturen am Grund einer Bohrung (hier nicht dargestellt) des Messobjekts 12 zu vermessen, indem bei gleichbleibender Vergrößerung lediglich die Fokussierung des Objektivs 43 so variiert wird, dass im einen Fall die Struktur an der Oberfläche des Messobjekts 12 und im anderen Fall die Struktur am Grund der Bohrung in der Fokusebene des Objektivs 43 liegt.

In anderen Varianten kann ein Anwender bei gleichbleibendem oder wechselndem Arbeitsabstand d, der einen Abstand zwischen dem Messobjekt 12 und einer ersten Störkontur, nämlich der Lichteintrittsöffnung 39 des Objektivs 43 bezeichnet, die Vergrößerung des Objektivs 43 variieren, um beispielsweise Details eines zuvor "aus der Vogelperspektive" vermessenen Messobjekts 12 erneut zu vermessen.

Des Weiteren kann ein Anwender in einigen Ausführungsbeispielen die numerische Apertur des Objektivs 43 durch Öffnen oder Schließen der Blende 52 verändern, um auf diese Weise eine gleichbleibende Auflösung bei unterschiedlichen Arbeitsentfernungen d zu erreichen. Ferner kann ein Anwender die Vergrößerung, Fokussierung, numerische Apertur einzeln oder in Kombination miteinander variieren, um das Objektiv 43 optimal an die Eigenschaften der verschiedenen Sensoren 36, 88, 90 anzupassen.

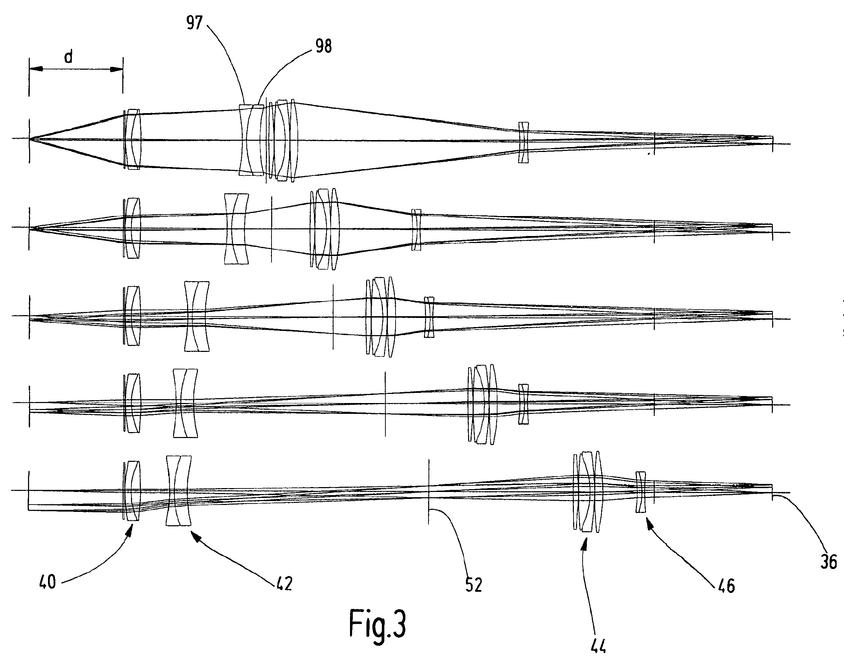

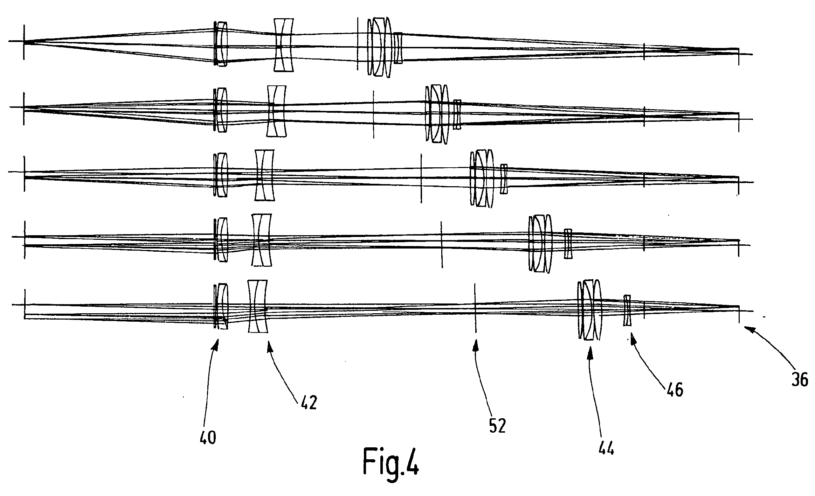

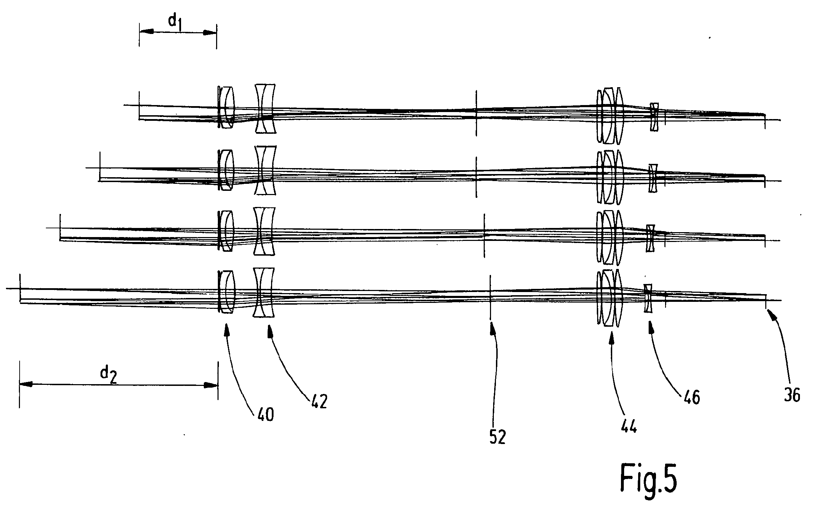

In den Fig. 3 bis 5 sind die Positionen der Linsengruppen 40, 42, 44, 46 und die Position der Blende 52 für verschiedene Arbeitsentfernungen d und verschiedene Vergrößerungen dargestellt. Wie man anhand der Schnittbilder erkennen kann, besitzt jede Linsengruppe mehrere Linsen 97, 98, wobei in diesem Ausführungsbeispiel in jeder Linsengruppe zumindest ein Kittglied bestehend aus zumindest zwei Linsen 97, 98 verwendet ist. Einige der Linsengruppen besitzen weitere separate Linsen. Bei einer hohen Vergrößerung stehen die zweite und dritte Linsengruppe nahe beieinander, wobei der tatsächliche Abstand zwischen der zweiten und dritten Linsengruppe zusätzlich vom Arbeitsabstand d abhängt. Wie man anhand Fig. 3 erkennen kann, stehen die zweite und dritte Linsengruppe bei kleinerem Arbeitsabstand d näher zusammen als bei einem größeren Arbeitsabstand.

Mit abnehmender Vergrößerung wandern die zweite und dritte Linsengruppe auseinander, wobei sich die zweite Linsengruppe der ersten Linsengruppe annähert. In der hohen Vergrößerung fokussieren die erste und zweite Linsengruppe ein vom Messobjekt entworfenes (virtuelles) Bild vor die Blende 52. Die vierte Linsengruppe wirkt in diesem Fall als Projektiv. Sie verlagert das Bild in die Ebene des Bildsensors 36. Mit abnehmender Vergrößerung entfernt sich das von der ersten und zweiten Linsengruppe entworfene Bild weiter von der Blende. Die dritte und vierte Linsengruppe nähern sich an und bilden mit gemeinsamer positiver Brechkraft das virtuelle Bild auf die Ebene des Bildsensors 36 ab.

In allen bevorzugten Ausführungsbeispielen folgt die Blende 52 jeweils dem Brennpunkt des aus der ersten und zweiten Linsengruppe gebildeten Teilsystems. Dies ermöglicht eine gute Feldkorrektion mit Hilfe der dritten und vierten Linsengruppe.

In einem bevorzugten Ausführungsbeispiel ist ein Messobjekt in einer Entfernung zwischen dem 0,8- bis 2-fachen der Brennweite der Linsengruppe 1 angeordnet. Die erste Linsengruppe besitzt eine positive Brechkraft. Die zweite Linsengruppe besitzt eine negative Brechkraft. Die dritte Linsengruppe besitzt eine positive Brechkraft, und die vierte Linsengruppe wieder eine negative Brechkraft. Die zweite, dritte und vierte Linsengruppe sind jeweils achromatisch korrigiert, während die erste Linsengruppe einen definierten chromatischen Längsfehler erzeugt. Die Blende 52 befindet sich jeweils im bildseitigen Brennpunkt des aus der ersten und zweiten Linsengruppe gebildeten Teilsystems. Eine entsprechende Steuerkurve für die axiale Position der Blende 52 gewährleistet eine objektseitige Telezentrie. Die Änderung des Blendendurchmessers gestattet eine an die jeweilige Vergrößerung und Objektstruktur angepasste objektseitige Apertur. Das von der ersten und zweiten Linsengruppe entworfene virtuelle Bild wird von der dritten und vierten Linsengruppe an einen definierten Ort abgebildet, der in einem definierten festen Abstand zu der ersten Linsengruppe angeordnet ist. An diesem definierten Ort befindet sich in den bevorzugten Ausführungsbeispielen der Bildsensor 36.

Die optionale fünfte Linsengruppe transformiert das Bild um einen konstanten Betrag mit einem skalaren Anteil an der Gesamtvergrößerung. Die Gesamtvergrößerung ist in den bevorzugten Ausführungsbeispielen reell ohne Zwischenbild. Die Auslegung des Systems sichert über den Gesamtvergrößerungsbereich eine Austrittspupillenlage bezogen auf das Bild nach der vierten Linsengruppe zwischen der halben und doppelten Entfernung zum Messobjekt. Dies ist vorteilhaft, um auch ohne eine strenge bildseitige Telezentrie Beleuchtungslicht verlustarm in das Objektiv 43 über die Schnittstelle 72 und/oder die Schnittstelle 35 einkoppeln zu können.

Die Brennweite des aus der ersten und zweiten Linsengruppe gebildeten Teilsystems wächst zu größeren Objektfeldern und führt die Blende 52 den in Richtung des Bildsensors 36 wandernden Linsengruppen nach. Dabei sind die Strahlhöhen an der dritten und vierten Linsengruppe aufgrund der Blende begrenzt, was eine gute Gesamtkorrektion der Abbildung ermöglicht. Das Gesamtsystem ist durch die paraxialen Grunddaten Vergrößerung, Fokussierung, Telezentrie und numerische Apertur unterbestimmt. Mit Hilfe der Steuerkurve für die axiale Position der Blende ist es möglich, eine ausgewogene Korrektur der Bildfehler über einen großen Verstellbereich der Vergrößerung zu erreichen. In einigen Ausführungsbeispielen ist das Verhältnis zwischen maximaler Vergrößerung und minimaler Vergrößerung größer als 10 und vorzugsweise größer als 15.

In den bevorzugten Ausführungsbeispielen kann das Objektiv 43 chromatische Querfehler aufweisen, um einen einfachen und kostengünstigen Aufbau zu ermöglichen. Dies hat zur Folge, dass Licht und Bilder unterschiedlicher Farben einen geringen Versatz quer zur optischen Achse 50 aufweisen können. In bevorzugten Ausführungsbeispielen wird der chromatische Querfehler anhand von mathematischen Korrekturrechnungen korrigiert, was in den bevorzugten Ausführungsbeispielen möglich ist, weil das Fehlerbild als solches stetig ist.

In einigen Ausführungsbeispielen des Objektivs 43 sind der Strahlteiler 64 und das Deckglas 38 so ausgebildet, dass eine polarisationsoptische Unterdrückung von Falschlicht erreicht wird. Dazu ist der Strahlteiler 64 als polarisierender Strahlteiler ausgebildet, und das Deckglas 38 ist eine λ/4-Platte. Auf diese Weise wird Licht, das zum Beispiel durch interne Reflexe im Objektivkörper entsteht, vom Strahlteiler 64 abgelenkt. Nur Licht, das mit Hin- und Rückweg durch die λ/4-Platte gegangen ist, wurde in der Polarisationsrichtung jeweils um 45° gedreht und kann nun den Strahlteiler 64 durch die insgesamt 90° gedrehte Polarisationsrichtung in Richtung der Kamera 34 passieren.

In bevorzugten Ausführungsbeispielen sind Fassungsteile der Linsengruppen geschwärzt, und die Linsengrenzflächen sind mit Antireflexbeschichtungen versehen. Grenzflächen von benachbarten Linsen sind so weit wie möglich verkittet. Die einzelnen Baugruppen sind gewichtsoptimiert, um schnelle Bewegungen der verfahrbaren Linsengruppen und Blende zu ermöglichen.

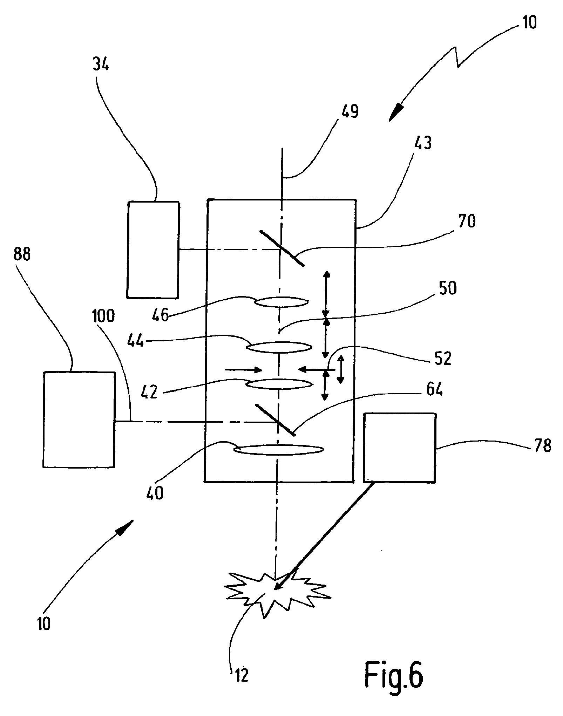

Fig. 6 zeigt ein schematisches Ausführungsbeispiel eines Koordinatenmessgeräts 10. Gleiche Elemente sind dabei mit gleichen Bezugszeichen gekennzeichnet und werden im Folgenden nicht erneut im Detail erläutert.

Das Koordinatenmessgerät 10 dient zum Vermessen eines Objekts 12. Hierzu ist eine Kamera 34 vorgesehen, auf die das Messobjekt 12 mittels des Objektivs 43 abgebildet wird. Zur Beleuchtung des Messobjekts 12 ist eine Lichtquelle 78 vorgesehen. Im dargestellten Ausführungsbeispiel bestrahlt die Lichtquelle 78 das Messobjekt 12 unter einem Winkel zu der Längsrichtung 49 bzw. der optischen Achse 50. Dies muss jedoch nicht notwendigerweise der Fall sein. Die Lichtquelle 78 kann auch eine Auflichtbeleuchtung konfokal zur Längsrichtung 49 oder eine Durchlichtbeleuchtung sein, wie dies voranstehend bereits beschrieben wurde. Die Kamera 34 ist in dem dargestellten Ausführungsbeispiel mittels eines Strahlteilers 70 bzw. in diesem Fall einem reflektiven optischen Element in das Objektiv eingekoppelt. Grundsätzlich ist aber auch diese Anordnung der Kamera 34 lediglich beispielhaft zu verstehen. Die Kamera 34 kann genauso konzentrisch mit der Längsachse 49 angeordnet sein.

Eine erste Linsengruppe des Objektivs 43 ist fest angeordnet, d.h. sie ist nicht entlang der Längsrichtung 49 bewegbar. Des Weiteren sind in dem dargestellten Ausführungsbeispiel die zweite, die dritte und die vierte Linsengruppe 42, 44, 46 und die zwischen der zweiten Linsengruppe 42 und der dritten Linsengruppe 44 angeordnete Blende 52 vorgesehen.

Zwischen die erste Linsengruppe 40 und die zweite Linsengruppe 42 ist wahlweise ein Koppelelement 64 einkoppelbar, das entweder als Strahlteiler oder als Spiegel ausgebildet sein kann. Im Falle der Ausbildung eines Strahlteilers, wie im Beispiel in Fig. 6 dargestellt, ermöglicht es eine gleichzeitige Verwendung von der Kamera 34 und dem Weißlichtsensor 88. Der Weißlichtsensor 88 wird mittels des Koppelelements 64 in den Strahlengang des Objektivs 43 eingekoppelt. Auf diese Weise nutzt der Weißlichtsensor 88 die feststehende erste Linsengruppe 40 des Objektivs 43 mit. Ein Strahlengang 100 zu dem Weißlichtsensor 88 wird somit mittels des Koppelelements 64 auf die Längsachse 49 des Objektivs 43 eingekoppelt.

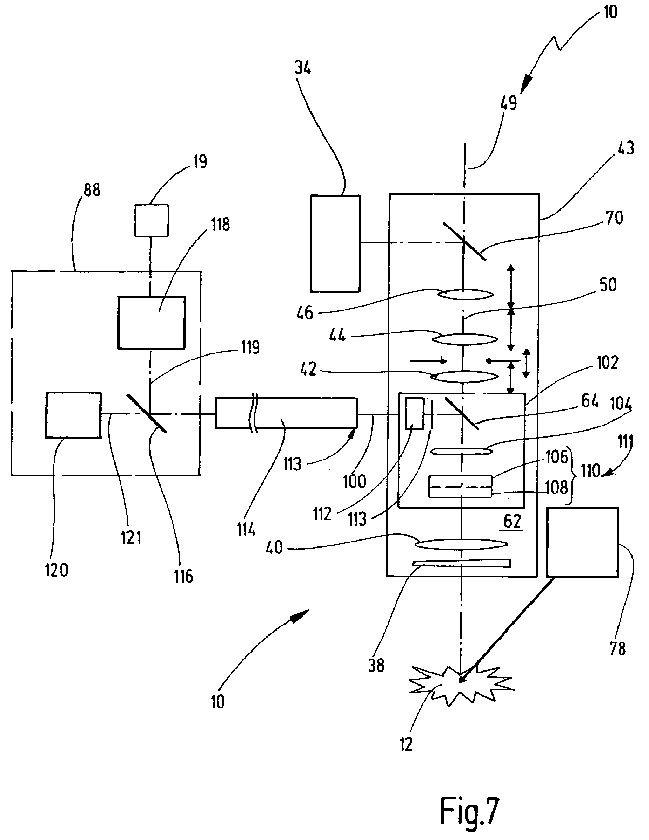

In der Fig. 7 ist ein weiteres Ausführungsbeispiel des Koordinatenmessgeräts schematisch dargestellt.

Gleiche Elemente wie in der Fig. 6 sind dabei mit gleichen Bezugszeichen gekennzeichnet und werden im Folgenden nicht erneut detailliert erläutert.

In dem dargestellten Ausführungsbeispiel weist der Weißlichtsensor 88 ein bewegbares oder schwenkbares Teil 102 auf, das in den Freiraum 62 zwischen der ersten Linsengruppe 40 und der zweiten Linsengruppe 42 wahlweise einbringbar ist. Dadurch wird es möglich, den Strahlengang 100 des Weißlichtsensors 88 auf die Längsachse 49 des Objektivs 43 einzukoppeln.

Des Weiteren weist das Koordinatenmessgerät ein Kollimationselement 104 auf, das zur Kollimierung des konvergenten bzw. divergenten Strahlenbündels zwischen dem Koppelelement 64 und der ersten Linsengruppe 40 angeordnet ist. Des Weiteren ist eine chromatische Baugruppe 111 vorgesehen. In dem dargestellten Ausführungsbeispiel ist die chromatische Baugruppe 111 durch zwei optische Elemente 106, 108 gebildet. Es kann grundsätzlich aber auch vorgesehen sein, dass die chromatische Baugruppe 111 nur durch ein einziges Dispersionselement 110 gebildet ist. Beispielsweise können das erste optische Element 106 und das zweite optische Element 108 jeweils durch ein refraktives optisches Element gebildet sein. Es können jedoch auch diffraktive oder holografische optische Elemente vorgesehen sein. Es ist lediglich ein einziges Dispersionselement 110 vorgesehen, dies kann insbesondere als diffraktives optisches Element ausgebildet sein. Die chromatische Baugruppe 111 dient dazu, gezielt eine chromatische Längsaberration in den Strahlengang 100 des Weißlichtsensors 88 einzubringen. Da insbesondere vorgesehen sein kann, dass jede der Linsengruppe 40, 42, 44, 46 des Objektivs 43 für sich genommen chromatisch korrigiert ist, kann eine chromatische Längsaberration nicht durch die erste Linsengruppe 40 bewirkt werden. Dazu ist die weitere chromatische Baugruppe 111 notwendig. Die Reihenfolge der Anordnung der chromatischen Baugruppe 111 und des Kollimationselement 104 sind lediglich beispielhaft zu verstehen. Sie kann auch anders herum gewählt sein. Insbesondere, wenn das Kollimationselement 104 nahe an der ersten Linsengruppe 40 angeordnet ist, kann das divergente bzw. konvergente Strahlenbündel mit einem relativ geringen Querschnittsdurchmesser kollimiert werden. Dies ermöglicht es, die chromatische Baugruppe 111, das Koppelelement 64 und eine Strahlführungsoptik 112 mit relativ geringen Durchmessern auszubilden.

Die Strahlführungsoptik 112 dient dazu, den von dem Koppelelement 64 ausgekoppelten Lichtanteil bzw. das ausgekoppelte Licht in eine Lichtleitfaser 114 einzukoppeln.

Grundsätzlich kann vorgesehen sein, dass das Kollimationselement 104 und die chromatische Baugruppe 111 zusammen mit dem Koppelelement 64 in den Freiraum 62 einbringbar sind. Falls mehrere chromatische Baugruppen 111 vorgesehen sind, können diese aber auch unabhängig von dem Koppelelement 64 und dem Kollimationselement 104 in den Freiraum 62 einbringbar sein, auf diese Weise kann es ermöglicht werden, wahlweise eine von mehreren chromatischen Baugruppen 111 in den Strahlengang einzukoppeln, um so das Maß der herbeigeführten chromatischen Längsaberration bzw. die Schnittweitendifferenz über dem verwendeten Wellenlängenspektrum gezielt vorzugeben.

Auch die Strahlführungsoptik 112 kann grundsätzlich zusammen mit dem Koppelelement 64 wahlweise in den Strahlengang einbringbar sein. Auch ein objektivseitiges Ende 113 in der Lichtleitfaser 114 kann grundsätzlich nur mit dem Koppelelement 64 zusammen in den Freiraum 62 verschwenkbar sein. Es kann jedoch auch vorgesehen sein, dass, wie dargestellt, das Ende 113 fest angeordnet ist. Darüber hinaus kann grundsätzlich auch vorgesehen sein, dass die Strahlführungsoptik 112 angeordnet ist. Die Lichtleitfaser 114 leitet das Licht hin zu dem Weißlichtsensor 88. Mittels eines Strahlteilers 116 wird das Licht in ein Strahlengang 119 hin zu einer Auswertungseinheit 118 des Weißlichtsensors 88 und in einen Strahlengang 121 hin zu einer Lichtquelle 120 des Weißlichtsensors 88 aufgeteilt. Auf diese Weise ist es möglich, das einfallende Licht mittels des Strahlteilers 116 in die Auswertungseinheit 118 zu reflektieren. Gleichzeitig kann durch die Rückseite des Strahlteilers 116 die gewünschte Beleuchtung bewirkt werden. Darüber hinaus kann grundsätzlich vorgesehen sein, dass durch ein Verschwenken des Strahlteilers 116 ein direktes Einkoppeln des Lichts von der Lichtquelle in die Auswertungseinheit 118 ermöglicht wird, ohne dass überhaupt das Licht durch die Lichtleitfaser 114 und auf das Messobjekt 12 geleitet wird. Auf diese Weise kann auf einfache Weise das eingestrahlte Spektrum genau vermessen werden. Beispielsweise wird es auf diese Weise möglich, eine auf das eingestrahlte Spektrum der Lichtquelle 120 nominierte Auswertung durchzuführen, so dass zeitliche Variationen des eingestrahlten Spektrums der Lichtquelle 120 bei der Auswertung berücksichtigt werden können. Darüber hinaus weist der chromatische Weißlichtsensor 88 üblicherweise eine konfokale Blende 113 auf, die zu einer Optimierung der Auflösung des Weißlichtsensors 88 dient. Die Blende 113 kann beispielsweise mit der Strahlführungsoptik 112 gekoppelt sein. Sie kann beispielsweise auch an einer Eintritts- oder Austrittsöffnung der Lichtleitfaser 114 vorgesehen sein, sofern die Lichtleitfaser 114 vorgesehen ist. Auch eine andere Position in dem Strahlengang 100 ist möglich.

Die Auswertungseinheit hat 118 kann mit der Auswertungs- und Steuereinheit 19 des Koordinatenmessgeräts gekoppelt oder sogar ein Teil von ihr sein. Die Auswertungseinheit 118 kann jedoch auch grundsätzlich separat vorhanden sein. Die getrennte Darstellung mit verschiedenen Blöcken erfolgt zu Anschauungszwecken.

Des Weiteren kann das Koordinatenmessgerät 38 im dargestellten Ausführungsbeispiel noch das Deckglas 38 aufweisen, das wie in Zusammenhang mit der Fig. 3 beschrieben, wirkt.

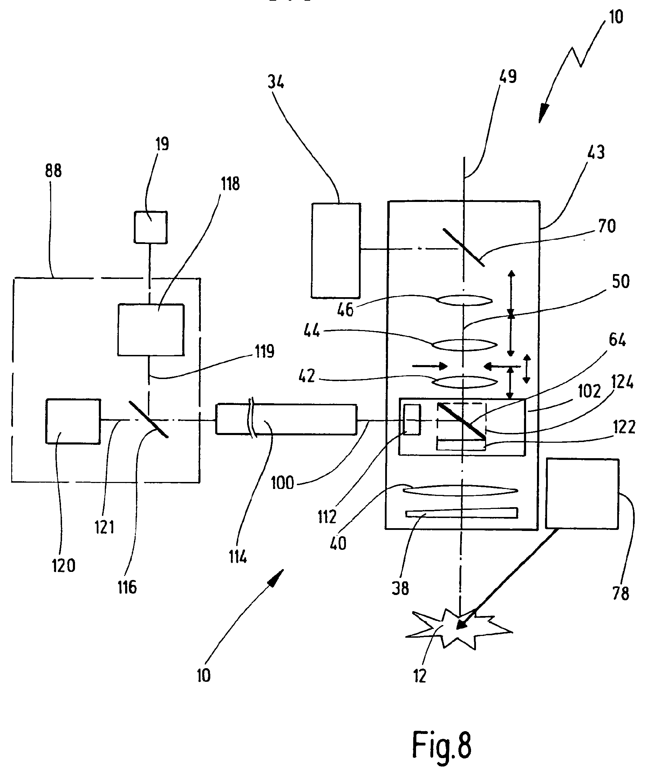

In der Fig. 8 ist ein weiteres Ausführungsbeispiel des Koordinatenmessgeräts 10 dargestellt. Gleiche Elemente sind wiederum mit gleichen Bezugszeichen gekennzeichnet und werden nicht erneut erläutert.

Das dargestellte Ausführungsbeispiel funktioniert grundsätzlich wie bereits im voranstehenden Beispiel mit Blick auf die Fig. 7 beschrieben.

Die in der Fig. 8 dargestellte Ausführungsform ermöglicht eine kürzere axiale Bauweise des Objektivs bzw. eine bessere Ausnutzung des Freiraums 62 zwischen der ersten Linsengruppe 40 und der zweiten Linsengruppe 42. Hierzu weist das Koordinatenmessgerät 10 ein diffraktives optisches Element 122 auf, das vorzugsweise als Blazegitter ausgebildet ist. Mittels eines solchen diffraktiven optischen Elements kann dieses gleichzeitig die Funktion des Dispersionselements des Kollimationselements bzw. der chromatischen Baugruppe 111 und des Kollimationselements 104 einnehmen. Es ist somit nur ein einziges Element 122 vorgesehen, das das Dispersionselement 110 und das Kollimationselement 104 ausbildet. Ein diffraktives optisches Element, kann grundsätzlich so ausgelegt werden, dass es die gewünschten Berechnungseigenschaften und dispersiven Eigenschaften aufweist. Insbesondere die Verwendung eines Blazegitters ermöglicht des Weiteren eine Maximierung des Beugungswirkungsgrads des diffraktiven optischen Elements für einen bestimmten von der Lichtquelle 120 verwendeten Wellenlängenbereich.

Wie in gestrichelten Linien angedeutet ist, kann das diffraktive optische Element 122 zusätzlich als ein Bauteil 124 ausgeführt sein, das auch die reflektiven Eigenschaften des Koppelelements 64 in sich vereint. Auf diese Weise wird eine besonders kompakte Bauform des gesamten Objektivs 43 ermöglicht. Die geometrische Anordnung des diffraktiven optischen Elements 122 bzw. 124 ist dabei lediglich beispielhaft zu verstehen und dient nur zu Erläuterungszwecken.

Grundsätzlich besteht auch die Möglichkeit, die gewünschten dispersiven Eigenschaften und kollimierenden Eigenschaften sowie optional auch die reflektiven Eigenschaften mittels eines einzigen holographischen Elements umzusetzen.

## Patentansprüche

1. Koordinatenmessgerät (10) zum Vermessen eines Messobjekts (12), mit einer Werkstückaufnahme (12) zur Aufnahme des Messobjekts (12), mit einem einen optischen Sensor (18) tragenden Messkopf (15), wobei der Messkopf (15) und die Werkstückaufnahme (12) relativ zueinander verfahrbar sind, wobei der optische Sensor (18) ein Objektiv (43) und eine Kamera (34) aufweist, die dazu ausgebildet ist, ein Bild des Messobjekts (12) durch das Objektiv (43) aufzunehmen, wobei das Objektiv (43) eine Lichteintrittsöffnung (39) und eine Lichtaustrittsöffnung (41) aufweist, wobei das Objektiv (43) eine Vielzahl von Linsengruppen (40, 42, 44, 46, 48) aufweist, die in dem Objektiv (43) zwischen der Lichteintrittsöffnung (39) und der Lichtaustrittsöffnung (41) hintereinander entlang einer Längsachse (49) des Objektivs (43) angeordnet sind, und **dadurch gekennzeichnet, dass** eine erste Linsengruppe (40) von der Vielzahl von Linsengruppen (40, 42, 44, 46, 48) im Bereich der Lichteintrittsöffnung (28) feststehend angeordnet ist, dass in dem Objektiv (43) zwischen der ersten und einer zweiten Linsengruppe (40, 42) ein Freiraum (62) ist, und dass das Koordinatenmessgerät (10) des Weiteren einen Weißlichtsensor (88) und ein in den Freiraum (62) bewegbares, zumindest teilweise reflektierendes Koppelelement (64) zum Einkoppeln des Weißlichtsensors (88) in das Objektiv (43) aufweist.

2. Koordinatenmessgerät nach Anspruch 1, **dadurch gekennzeichnet, dass** das Koordinatenmessgerät (10) ein Kollimationselement (104) zwischen der ersten Linsengruppe (40) und dem Koppelelement (64) aufweist.

3. Koordinatenmessgerät nach Anspruch 2, **dadurch gekennzeichnet, dass** das Kollimationselement (104) mindestens ein optisches Element aufweist, das aus einer Gruppe bestehend aus einem refraktiven optisches Element, einem diffraktiven optischen Element und einem holografischen optischen Element ausgewählt ist.

4. Koordinatenmessgerät nach Anspruch 2 oder 3, **dadurch gekennzeichnet, dass** das Kollimationselement (104) zusammen mit dem Koppelelement (64) bewegbar ist.

5. Koordinatenmessgerät nach einem der Ansprüche 1 bis 4, **dadurch gekennzeichnet, dass** das Koordinatenmessgerät (10) des Weiteren eine Strahlführungsoptik (112) zum Führen von Licht (100) von dem Koppelelement (64) zu dem Weißlichtsensor (88) aufweist.

6. Koordinatenmessgerät nach Anspruch 5, **dadurch gekennzeichnet, dass** die Strahlführungsoptik (112) zusammen mit dem Koppelelement (64) bewegbar ist und Licht (100) von dem Koppelelement (64) in eine Lichtleitfaser (114) führt, die derart angeordnet ist, dass sie die Strahlführungsoptik (112) mit einer Auswertungseinheit (118) und einer Lichtquelle (12) des Weißlichtsensors (88) optisch verbindet.

7. Koordinatenmessgerät nach Anspruch 6, **dadurch gekennzeichnet, dass** der Weißlichtsensor (88) einen Strahlteiler (116) aufweist, der einen Strahlengang (121) von von der Lichtquelle (120) emittiertem Licht und einen Strahlengang (119) von auf die Auswertungseinheit (118) einfallendem Licht zusammenführt.

8. Koordinatenmessgerät nach einem der Ansprüche 1 bis 7, **dadurch gekennzeichnet, dass** die erste Linsengruppe (40) achromatisch ausgebildet ist.

9. Koordinatenmessgerät nach einem der Ansprüche 1 bis 8, **dadurch gekennzeichnet, dass** jede Linsengruppe der Vielzahl von Linsengruppen (40, 42, 44, 46, 48) des Objektivs (43) achromatisch ausgebildet ist.

10. Koordinatenmessgerät nach einem der Ansprüche 1 bis 9, **dadurch gekennzeichnet, dass** das Koordinatenmessgerät (10) des Weiteren mindestens eine chromatische Baugruppe (110) aufweist, die in den Freiraum (62) bewegbar ist.

11. Koordinatenmessgerät nach Anspruch 10, **dadurch gekennzeichnet, dass** die mindestens eine chromatische Baugruppe (111) aus einem einzigen Dispersionselement (110) zum Herbeiführen einer chromatische Längsaberration besteht.

12. Koordinatenmessgerät nach Anspruch 11, **dadurch gekennzeichnet, dass** das Dispersionselement (110) ein diffraktives optisches Element oder ein holografisches optisches Element ist.

13. Koordinatenmessgerät nach einem der Ansprüche 1 bis 12, **dadurch gekennzeichnet, dass** das Objektiv (43) eine Blende (52) und mindestens vier Linsengruppen (40, 42, 44, 46, 48) aufweist, und dass die Blende (52) und die zweite Linsengruppe (42), eine dritte Linsengruppe (44) und eine vierte Linsengruppe (46) von den mindestens vier Linsengruppen relativ zu der ersten Linsengruppe (40) entlang der optischen Achse (50) verschiebbar sind, wobei die zweite Linsengruppe (42) zwischen der ersten Linsengruppe (40) und der Blende (52) angeordnet ist, und wobei die dritte und die vierte Linsengruppe (44, 46) zwischen der Blende (52) und der Lichtaustrittsöffnung (30) angeordnet sind.

14. Koordinatenmessgerät nach einem der Ansprüche 1 bis 13, **dadurch gekennzeichnet, dass** die erste, die zweite, die dritte und die vierte Linsengruppe (40, 42, 44, 46) jeweils aus zumindest zwei Linsen (100, 102) bestehen.

15. Koordinatenmessgerät nach einem der Ansprüche 1 bis 14, **dadurch gekennzeichnet, dass** mindestens zwei Linsengruppen (40, 42, 44, 46, 48) parallel zu der Längsachse (49) verschiebbar sind.

16. Koordinatenmessgerät nach einem der Ansprüche 1 bis 13, **dadurch gekennzeichnet, dass** das Objektiv (43) ein separates Deckglas (38) besitzt, das vor der ersten Linsengruppe (40) im Bereich der Lichteintrittsöffnung (28) angeordnet ist.

17. Koordinatenmessgerät nach den Ansprüchen 2 und 12, **dadurch gekennzeichnet, dass** das Koordinatenmessgerät (10) ein diffraktives oder holografisches optisches Element (122) aufweist, das sowohl das Kollimationselement (104) als auch das Dispersionselement (110) bildet.

## Claims

1. Coordinate measuring machine (10) for measuring a measurement object (12), comprising a workpiece receptacle (12) for receiving the measurement object (12), comprising a measuring head (15) carrying an optical sensor (18), wherein the measuring head (15) and the workpiece receptacle (12) are movable relative to one another, wherein the optical sensor (18) has a lens (43) and a camera (34), which is designed to capture an image of the measurement object (12) through the lens (43), wherein the lens (43) has a light entrance opening (39) and a light exit opening (41), wherein the lens (43) has a multiplicity of lens-element groups (40, 42, 44, 46, 48) which are arranged in the lens (43) between the light entrance opening (39) and the light exit opening (41) one behind another along a longitudinal axis (49) of the lens (43), and **characterized in that** a first lens-element group (40) from the multiplicity of lens-element groups (40, 42, 44, 46, 48) is arranged in a stationary fashion in the region of the light entrance opening (28), **in that** there is a clearance (62) in the lens (43) between the first and a second lens-element group (40, 42), and **in that** the coordinate measuring machine (10) furthermore has a white light sensor (88) and an at least partly reflective coupling element (64) for coupling the white light sensor (88) into the lens (43), said coupling element being movable into the clearance (62).

2. Coordinate measuring machine according to Claim 1, **characterized in that** the coordinate measuring machine (10) has a collimation element (104) between the first lens-element group (40) and the coupling element (64).

3. Coordinate measuring machine according to Claim 2, **characterized in that** the collimation element (104) has at least one optical element selected from a group consisting of a refractive optical element, a diffractive optical element and a holographic optical element.

4. Coordinate measuring machine according to Claim 2 or 3, **characterized in that** the collimation element (104) is movable together with the coupling element (64).

5. Coordinate measuring machine according to any of Claims 1 to 4, **characterized in that** the coordinate measuring machine (10) furthermore has a beam guiding optical unit (112) for guiding light (100) from the coupling element (64) to the white light sensor (88).

6. Coordinate measuring machine according to Claim 5, **characterized in that** the beam guiding optical unit (112) is movable together with the coupling element (64) and guides light (100) from the coupling element (64) into an optical fibre (114) arranged in such a way that it optically connects the beam guiding optical unit (112) to an evaluation unit (118) and a light source (12) of the white light sensor (88).

7. Coordinate measuring machine according to Claim 6, **characterized in that** the white light sensor (88) has a beam splitter (116), which combines a beam path (121) of light emitted by the light source (120) and a beam path (119) of light incident on the evaluation unit (118).

8. Coordinate measuring machine according to any of Claims 1 to 7, **characterized in that** the first lens-element group (40) is embodied in an achromatic fashion.

9. Coordinate measuring machine according to any of Claims 1 to 8, **characterized in that** each lens-element group of the multiplicity of lens-element groups (40, 42, 44, 46, 48) of the lens (43) is embodied in an achromatic fashion.

10. Coordinate measuring machine according to any of Claims 1 to 9, **characterized in that** the coordinate measuring machine (10) furthermore has at least one chromatic assembly (110) which is movable into the clearance (62).

11. Coordinate measuring machine according to Claim 10, **characterized in that** the at least one chromatic assembly (111) consists of a single dispersion element (110) for bringing about a longitudinal chromatic aberration.

12. Coordinate measuring machine according to Claim 11, **characterized in that** the dispersion element (110) is a diffractive optical element or a holographic optical element.

13. Coordinate measuring machine according to any of Claims 1 to 12, **characterized in that** the lens (43) has a diaphragm (52) and at least four lens-element groups (40, 42, 44, 46, 48), and **in that** the diaphragm (52) and the second lens-element group (42), a third lens-element group (44) and a fourth lens-element group (46) from the at least four lens-element groups are displaceable relative to the first lens-element group (40) along the optical axis (50), wherein the second lens-element group (42) is arranged between the first lens-element group (40) and the diaphragm (52), and wherein the third and fourth lens-element groups (44, 46) are arranged between the diaphragm (52) and the light exit opening (30).

14. Coordinate measuring machine according to any of Claims 1 to 13, **characterized in that** the first, second, third and fourth lens-element groups (40, 42, 44, 46) in each case consist of at least two lens elements (100, 102).

15. Coordinate measuring machine according to any of Claims 1 to 14, **characterized in that** at least two lens-element groups (40, 42, 44, 46, 48) are displaceable parallel to the longitudinal axis (49).

16. Coordinate measuring machine according to any of Claims 1 to 13, **characterized in that** the lens (43) has a separate cover glass (38), which is arranged upstream of the first lens-element group (40) in the region of the light entrance opening (28).

17. Coordinate measuring machine according to Claims 2 and 12, **characterized in that** the coordinate measuring machine (10) has a diffractive or holographic optical element (122) that forms both the collimation element (104) and the dispersion element (110).

## Revendications

1. Appareil de mesure de coordonnées (10) destiné au mesurage d'un objet à mesurer (12), comprenant un logement de pièce (12) destiné à accueillir l'objet à mesurer (12), comprenant une tête de mesure (15) portant un capteur optique (18), la tête de mesure (15) et le logement de pièce (12) pouvant être déplacés l'un par rapport à l'autre, le capteur optique (18) possédant un objectif (43) et une caméra (34) qui est configurée pour capturer une image de l'objet à mesurer (12) à travers l'objectif (43), l'objectif (43) possédant une ouverture d'entrée de lumière (39) et une ouverture de sortie de lumière (41), l'objectif (43) possédant une pluralité de groupes de lentilles (40, 42, 44, 46, 48) qui sont disposés dans l'objectif (43) les uns derrière les autres entre l'ouverture d'entrée de lumière (39) et l'ouverture de sortie de lumière (41) le long d'un axe longitudinal (49) de l'objectif (43), et **caractérisé en ce qu'**un premier groupe de lentilles (40) de la pluralité de groupes de lentilles (40, 42, 44, 46, 48) est disposé en position fixe dans la zone de l'ouverture d'entrée de lumière (28), **en ce qu'**un espace libre (62) se trouve dans l'objectif (43) entre le premier et un deuxième groupe de lentilles (40, 42) et **en ce que** l'appareil de mesure de coordonnées (10) possède en outre un capteur de lumière blanche (88) et un élément de couplage (64), mobile dans l'espace libre (62) et au moins partiellement réfléchissant, destiné à l'intégration du capteur de lumière blanche (88) dans l'objectif (43).

2. Appareil de mesure de coordonnées selon la revendication 1, **caractérisé en ce que** l'appareil de mesure de coordonnées (10) possède un élément de collimation (104) entre le premier groupe de lentilles (40) et l'élément de couplage (64).

3. Appareil de mesure de coordonnées selon la revendication 2, **caractérisé en ce que** l'élément de collimation (104) possède au moins un élément optique qui est choisi dans un groupe composé d'un élément optique réfractif, d'un élément optique diffractif et d'un élément optique holographique.

4. Appareil de mesure de coordonnées selon la revendication 2 ou 3, **caractérisé en ce que** l'élément de collimation (104) peut être déplacé conjointement avec l'élément de couplage (64).

5. Appareil de mesure de coordonnées selon l'une des revendications 1 à 4, **caractérisé en ce que** l'appareil de mesure de coordonnées (10) possède en outre une optique de guidage de faisceau (112) destinée à guider la lumière (100) de l'élément de couplage (64) vers le capteur de lumière blanche (88).

6. Appareil de mesure de coordonnées selon la revendication 5, **caractérisé en ce que** l'optique de guidage de faisceau (112) peut être déplacée conjointement avec l'élément de couplage (64) et guide la lumière (100) de l'élément de couplage (64) dans une fibre optique (114), laquelle est disposée de telle sorte qu'elle relie optiquement l'optique de guidage de faisceau (112) à une unité d'interprétation (118) et une source de lumière (12) du capteur de lumière blanche (88).

7. Appareil de mesure de coordonnées selon la revendication 6, **caractérisé en ce que** le capteur de lumière blanche (88) possède un séparateur de faisceaux (116) qui rassemble un trajet de faisceau (121) de la lumière émise depuis la source de lumière (120) et un trajet de faisceau (119) de la lumière incidente sur l'unité d'interprétation (118).

8. Appareil de mesure de coordonnées selon l'une des revendications 1 à 7, **caractérisé en ce que** le premier groupe de lentilles (40) est de configuration achromatique.

9. Appareil de mesure de coordonnées selon l'une des revendications 1 à 8, **caractérisé en ce que** chaque groupe de lentilles de la pluralité de groupes de lentilles (40, 42, 44, 46, 48) de l'objectif (43) est de configuration achromatique.

10. Appareil de mesure de coordonnées selon l'une des revendications 1 à 9, **caractérisé en ce que** l'appareil de mesure de coordonnées (10) possède en outre au moins un sous-ensemble chromatique (110) qui peut être déplacé dans l'espace libre (62).

11. Appareil de mesure de coordonnées selon la revendication 10, **caractérisé en ce que** l'au moins un sous-ensemble chromatique (111) se compose d'un élément de dispersion (110) unique destiné à provoquer une aberration longitudinale chromatique.

12. Appareil de mesure de coordonnées selon la revendication 11, **caractérisé en ce que** l'élément de dispersion (110) est un élément optique diffractif ou un élément optique holographique.

13. Appareil de mesure de coordonnées selon l'une des revendications 1 à 12, **caractérisé en ce que** l'objectif (43) possède un obturateur (52) et au moins quatre groupes de lentilles (40, 42, 44, 46, 48), et **en ce que** l'obturateur (52) et le deuxième groupe de lentilles (42), un troisième groupe de lentilles (44) et un quatrième groupe de lentilles (46) des au moins quatre groupes de lentilles peuvent coulisser le long de l'axe optique (50) par rapport au premier groupe de lentilles (40), le deuxième groupe de lentilles (42) étant disposé entre le premier groupe de lentilles (40) et l'obturateur (52), et le troisième et le quatrième groupe de lentilles (44, 46) étant disposés entre l'obturateur (52) et l'ouverture de sortie de lumière (30).

14. Appareil de mesure de coordonnées selon l'une des revendications 1 à 13, **caractérisé en ce que** le premier, le deuxième, le troisième et le quatrième groupe de lentilles (40, 42, 44, 46) se composent respectivement d'au moins deux lentilles (100, 102).

15. Appareil de mesure de coordonnées selon l'une des revendications 1 à 14, **caractérisé en ce qu'**au moins deux groupes de lentilles (40, 42, 44, 46, 48) peuvent coulisser parallèlement à l'axe longitudinal (49).

16. Appareil de mesure de coordonnées selon l'une des revendications 1 à 13, **caractérisé en ce que** l'objectif (43) possède un verre de protection (38) séparé qui est disposé devant le premier groupe de lentilles (40) dans la zone de l'ouverture d'entrée de lumière (28).

17. Appareil de mesure de coordonnées selon les revendications 2 et 12, **caractérisé en ce que** l'appareil de mesure de coordonnées (10) possède un élément optique diffractif ou holographique (122) qui forme à la fois l'élément de collimation (104) et l'élément de dispersion (110).
